# DEMANDE DE BREVET EUROPEEN

(11) **EP 4 810 137 A1**
(43) Date de publication de la demande: **23.09.2026**
(21) Numéro de dépôt: 26164935.4
(22) Date de dépôt: 16.03.2026
(51) Int. Cl.: A63F 13/24, A63F 13/245, A63F 13/803

(54) **CONTRÔLEUR DE JEU OU DE SIMULATION À COLONNE DE DIRECTION MULTI-TOURS**

(30) Priorité: 20.03.2025 FR 2502842
(71) Demandeur: Guillemot Corporation, 56910 Carentoir (FR)
(72) Inventeur: PENNANEAC' H, Patrick, 35220 Châteaubourg (FR)
(74) Mandataire: Vidon Brevets & Stratégie

(57) **Abrégé**

L'invention concerne un contrôleur (100) de jeu vidéo ou de simulation comprenant une base (1) et un actionneur manuel (2) mobile en rotation par rapport à ladite base (1), ledit actionneur manuel (2) étant couplé à une colonne de direction (3) rotative de ladite base (1) de façon à simuler au moins un contrôle de la rotation d'un organe de commande d'un véhicule simulé, ladite colonne de direction (3) étant couplée à un système réducteur (5) multi-tours de ladite base (1), ledit système réducteur (5) comprenant au moins les éléments suivants :
- un premier engrenage (51) solidaire de ladite colonne de direction (3) ;
- un deuxième engrenage (52) mobile en rotation sur un premier arbre (41), ledit premier engrenage (51) étant configuré pour entrainer ledit deuxième engrenage (52), une rotation de ladite colonne de direction (3) selon une première valeur d'angle entrainant une rotation dudit deuxième engrenage (52) selon une deuxième valeur d'angle, ladite deuxième valeur d'angle étant inférieure à ladite première valeur d'angle selon un premier ratio prédéterminé; et
- une couronne ou un secteur de couronne (53) mobile en rotation sur un deuxième arbre (42), ledit deuxième engrenage (52) étant configuré pour entrainer ladite couronne ou ledit secteur de couronne (53),
une rotation de ladite colonne de direction (3) selon une première valeur d'angle entrainant une rotation de ladite couronne ou dudit secteur de couronne (53) selon une troisième valeur d'angle, ladite troisième valeur d'angle étant inférieure à ladite deuxième valeur d'angle selon un deuxième ratio prédéterminé.

## Description

### 1. Domaine technique

Le domaine technique de l'invention est celui des matériels et accessoires de loisirs interactifs pour micro-ordinateurs et consoles de jeux.

Plus précisément, l'invention concerne un contrôleur de jeu ou de simulation comprenant une base et un actionneur manuel mobile en rotation solidaire d'une colonne de direction de cette base.

Il peut par exemple s'agir d'un volant, d'un guidon, ou de tout autre élément pouvant être utilisé dans un jeu de simulation, notamment pour contrôler les déplacements d'un véhicule. Certains jeux vidéo mettent en effet en œuvre un véhicule simulé qui évolue dans un environnement simulé. La reproduction du véhicule simulé peut être une reproduction fidèle d'un véhicule réel, mais elle peut également n'être qu'inspirée d'un véhicule réel, ou être sans lien avec la réalité.

L'invention concerne également une base seule destinée à former avec un actionneur manuel, qui vient se fixer de façon amovible sur la base, un tel contrôleur de jeu ou de simulation.

### 2. Art antérieur

À ce jour, l'industrie des équipements de divertissement se développe rapidement, en particulier l'industrie des micro-ordinateurs et consoles de jeux vidéo, et par extension l'industrie des accessoires associés.

Parmi les jeux disponibles sur de tels appareils informatiques, il existe les jeux de simulation qui visent à reproduire le fonctionnement de machines ou de systèmes réels.

Pour contrôler de tels jeux, il est connu d'utiliser des accessoires dédiés appelés ici actionneurs manuels, dont la nature est déterminée en fonction des applications et des besoins, dans le but de se rapprocher le plus possible de la réalité.

Ainsi pour un jeu vidéo simulant la conduite d'un véhicule, l'utilisation d'un actionneur manuel correspondant dans sa forme et dans son utilisation au type de véhicule piloté rend la simulation plus réaliste.

Par exemple, pour un jeu de course de voitures grand tourisme, l'actionneur manuel est un volant ayant la forme et les fonctions du volant d'une voiture grand tourisme. En effet, lorsque l'on conduit une voiture et que l'on tourne le volant, il est connu que le volant ne peut être tourné, vers la gauche ou vers la droite, qu'un certain nombre de fois et qu'il ne peut pas être tourné davantage. Pour une bonne expérience de jeu, il est donc nécessaire que le volant du contrôleur reproduise ce fonctionnement.

De façon classique, les contrôleurs de jeux de conduite comprennent un actionneur manuel (volant, barre à roue de bateau, ou guidon, par exemple) monté sur une colonne de direction qui pivote autour d'un axe par rapport à un socle permettant à l'utilisateur de faire varier la trajectoire du véhicule simulé.

De tels contrôleurs sont en général multi-tours en ce sens que, à partir d'une position centrée ou neutre, l'actionneur manuel peut tourner sur plus de 180° dans le sens horaire (c'est-à-dire dans le sens des aiguilles d'une montre) et sur plus de 180° dans le sens anti-horaire (c'est-à-dire dans le sens inverse des aiguilles d'une montre) de sorte à permettre un fonctionnement à plus de 360°.

Pour ce faire, une première solution de système réducteur connue consiste à disposer, sur la colonne de direction, une roue dentée qui engrène une crémaillère solidaire d'un curseur. Ce curseur est mobile en translation entre deux butées solidaires du socle du contrôleur. La rotation du volant, et donc de la colonne de direction associée, entraîne ainsi le coulissement du curseur et de sa crémaillère entre les butées.

Est également connue une deuxième solution de système réducteur multi-tours comprenant une première roue dentée disposée sur la colonne de direction. Cette solution comprend des premier et second moteurs qui sont montés respectivement sur les deux côtés du socle. Chaque moteur porte une seconde roue dentée qui engrène la première roue dentée portée par la colonne de direction. Chacune des secondes roues dentée porte des butées aptes à coopérer avec des butées complémentaires portées par le socle du contrôleur. La position des butées des secondes roues dentée est fonction du nombre de tours désiré afin de permettre une rotation de plus de 360° de l'actionneur manuel.

Ces solutions de système réducteur présentent toutefois des inconvénients, et sont notamment encombrantes.

Pour la première solution, l'encombrement est essentiellement dû à la crémaillère, et donc au curseur. En effet, pour que cette solution puisse permettre une rotation de plus de 360° de l'actionneur manuel, il est nécessaire que la crémaillère présente une longueur relativement importante. Cette longueur est déterminée est fonction du nombre de tours désiré.

Pour la deuxième solution, l'encombrement est essentiellement dû à la mise en œuvre des premier et second moteurs, et plus particulièrement à la disposition de ceux-ci par rapport à la première roue dentée portée par la colonne de direction.

Dans ces deux solutions, l'encombrement du socle, correspondant à la superficie de la base du contrôleur, est relativement important. Ces solutions connues sont donc peu adaptées aux espaces exiguës, tels certains bureaux ou tables de support, et peuvent être relativement complexes à transporter et/ou à ranger.

Les solutions qui mettent en œuvre un ou plusieurs moteurs électriques pour le retour en position neutre de la colonne de direction (y compris pour les effets de retour de force qui, en anglais, sont appelés « force feedback effects ») sont coûteuses, pesantes (trop lourdes), consommatrices de ressources limitées pour leur fabrication (terres rares pour les aimants, cuivre pour les bobines) et pour leur utilisation (énergie électrique), chauffent inutilement (pertes thermiques), mettent en œuvre des programmes complexes pour commander le ou les moteurs électriques (or, ces programmes nécessitent des mises à jour de temps en temps), nécessitent un adaptateur secteur différent selon le pays (pour se brancher à des prises secteurs qui diffèrent selon le pays d'utilisation) ce qui augmente les coûts et complique la gestion des stocks de produits finis.

### 3. Objectifs de l'invention

L'invention a notamment pour objectif de pallier ces inconvénients de l'art antérieur.

Plus précisément, l'invention a pour objectif de fournir un contrôleur de jeu à colonne de direction multi-tours, notamment pour les simulations de conduite de véhicules, dont l'encombrement et la masse sont limités, et ce sans nuire ni au réalisme du jeu, ni à la sécurité de l'utilisateur.

Un autre objectif de l'invention est de fournir une telle technique dépourvue de motorisation et ne nécessitant donc pas de branchement sur une prise secteur.

Un autre objectif de l'invention est de fournir, selon au moins un mode de réalisation, un contrôleur de jeu à colonne de direction multi-tours qui permet à son utilisateur de régler au moins un paramètre de fonctionnement selon ses préférences et/ou habitudes d'utilisation.

Un autre objectif de l'invention est de fournir, selon au moins un mode de réalisation, un contrôleur de jeu à colonne de direction multi-tours doté d'une grande longévité et d'une bonne résistance aux efforts exercés par l'utilisateur.

Un autre objectif de l'invention est de fournir, selon au moins un mode de réalisation, un contrôleur de jeu à colonne de direction multi-tours silencieux et ne générant pas, ou peu, de vibrations parasites susceptibles de nuire à l'expérience d'utilisation du contrôleur de jeu.

Un autre objectif de l'invention est de fournir, selon au moins un mode de réalisation, un contrôleur de jeu à colonne de direction multi-tours qui est sobre, meilleur pour la planète.

Un autre objectif de l'invention est de fournir, selon au moins un mode de réalisation, un contrôleur de jeu à colonne de direction multi-tours qui est simple de fabrication (comprenant peu de pièces) et de maintenance.

Encore un autre objectif est de selon au moins un mode de réalisation, un contrôleur de jeu à colonne de direction multi-tours qui améliore le réalisme de la simulation.

Un autre objectif de l'invention est de fournir un tel contrôleur de jeu à colonne de direction multi-tours pour un coût modique.

### 4. Résumé de l'invention

Ces objectifs, ainsi que d'autres qui apparaîtront par la suite, sont atteints à l'aide d'un contrôleur de jeu vidéo ou de simulation comprenant une base et un actionneur manuel mobile en rotation par rapport à ladite base, ledit actionneur manuel étant couplé à une colonne de direction rotative de ladite base de façon à simuler au moins un contrôle de la rotation d'un organe de commande d'un véhicule simulé, ladite colonne de direction étant couplée à un système réducteur multi-tours de ladite base, ledit système réducteur comprenant au moins les éléments suivants :
- un premier engrenage solidaire de ladite colonne de direction ;
- un deuxième engrenage mobile en rotation sur un premier arbre, ledit premier engrenage étant configuré pour entrainer ledit deuxième engrenage,
une rotation de ladite colonne de direction selon une première valeur d'angle entrainant une rotation dudit deuxième engrenage selon une deuxième valeur d'angle, ladite deuxième valeur d'angle étant inférieure à ladite première valeur d'angle selon un premier ratio prédéterminé; et
- une couronne ou un secteur de couronne mobile en rotation sur un deuxième arbre, ledit deuxième engrenage étant configuré pour entrainer ladite couronne ou ledit secteur de couronne,
une rotation de ladite colonne de direction selon une première valeur d'angle entrainant une rotation de ladite couronne ou dudit secteur de couronne selon une troisième valeur d'angle, ladite troisième valeur d'angle étant inférieure à ladite deuxième valeur d'angle selon un deuxième ratio prédéterminé.

Le choix de mettre en œuvre un premier engrenage solidaire de la colonne de direction permet une transmission directe de la rotation (un transfert parfait, y compris de la vitesse de rotation) entre ce premier engrenage et la colonne de direction (et donc l'actionneur manuel, lorsqu'il y est couplé), et permet donc à ce premier engrenage de dynamiser ladite colonne de direction (et donc l'actionneur manuel) en évitant l'utilisation d'une ou plusieurs pièces intermédiaires qui augmenteraient la complexité, les coûts, l'encombrement, la masse, et qui risqueraient en outre de générer des frottements, de rendre le fonctionnement moins silencieux, et de nuire à la fluidité de la rotation de la colonne de direction.

Le choix de mettre en œuvre un système réducteur à deux étages (il est à noter que ce type de système réducteur est parfois appelé « à double réduction ») au lieu d'un système à un seul étage surmonte un préjugé technique non-pertinent puisque d'une part un système à un étage permet déjà un rapport de réduction généralement compris entre 1:1 et 1:6, et donc une fonction multi-tours, puisque d'autre part les systèmes réducteurs à deux étages sont plus complexes que les systèmes réducteurs à un étage, et puisque enfin les systèmes réducteurs à deux étages sont plus chers que les systèmes réducteurs à un étage, etc.). Ce choix est a priori contraire aux objectifs de l'invention, notamment les objectifs de réduction de coût et de simplicité. Il est également contre-intuitif de réduire l'encombrement en ajoutant un engrenage (ajout qui va nécessairement ajouter de l'espace occupé par cet engrenage et de la masse supplémentaire, donc de l'encombrement et de la masse) contrairement à l'un des objectifs recherchés.

Malgré tout, une telle structure de système réducteur à couronne et au moins deux étages de réduction permet d'assurer une fonction multi-tours, c'est-à-dire une rotation à plus de 360° de la colonne de direction du contrôleur, sans nécessiter ni motorisation, ni système réducteur coûteux (il est obtenu par moulage par injection de POM par exemple). S'affranchir d'une motorisation présente de nombreux avantages, à savoir notamment : limiter la masse du contrôleur, réduire les coûts de fabrication du contrôleur, minimiser la consommation énergétique du contrôleur lors de son fonctionnement, etc.

Une telle structure de système réducteur à couronne, dont la couronne ou le secteur de couronne n'est pas porté(e) par le même arbre que l'arbre qui porte le deuxième engrenage (c'est-à-dire dont la couronne ou le secteur de couronne n'est pas porté par le premier arbre), évite une diminution du couple dans la chaîne cinématique vers la couronne et, à l'inverse, évite une augmentation du couple dans la chaîne cinématique vers la colonne de direction (l'utilisateur n'est pas sensé subir des efforts trop élevés au risque qu'il perde le contrôle et/ou qu'il soit blessé).

Par ailleurs, un tel système réducteur présente un volume restreint, limitant ainsi l'encombrement du contrôleur le mettant en œuvre.

Selon un aspect particulier de l'invention, - ledit premier engrenage est une première roue planétaire solidaire de ladite colonne de direction ; - ledit deuxième engrenage est une deuxième roue satellite mobile en rotation sur ledit premier arbre solidaire de ladite base, ledit premier arbre étant disposé de manière parallèle à ladite colonne de direction, ladite première roue planétaire étant configurée pour entrainer ladite deuxième roue satellite ;
- ledit deuxième arbre étant solidaire de ladite base et disposé de manière coaxiale avec ladite colonne de direction ;
- ladite deuxième roue satellite étant en contact avec ledit secteur de couronne à l'intérieur dudit secteur de couronne ; et
ledit secteur de couronne s'étendant selon un angle (α) compris entre 150 et 250°. L'agencement particulier des engrenages permet un montage simple et la mise en œuvre d'un secteur de couronne à contact intérieur permet notamment de limiter davantage l'encombrement du système réducteur, tout en conservant la fonction multi-tours.

Cela permet en outre de limiter la quantité de matériau utilisé pour la fabrication du contrôleur.

Une telle configuration permet notamment d'inscrire le contrôleur de la technique proposée dans une démarche écologique.

Selon un autre aspect particulier de l'invention, ledit contrôleur comprend un mécanisme de retour dudit système réducteur dans une position neutre en l'absence de sollicitation dudit actionneur manuel, ledit mécanisme de retour comprenant :
- au moins un élément mobile en rotation au moins sur ledit deuxième arbre, ledit au moins un élément mobile coopérant avec ladite couronne ou ledit secteur de couronne de sorte qu'un déplacement de ladite couronne ou dudit secteur de couronne entraine un déplacement dudit au moins un élément mobile, ledit au moins un élément mobile pouvant se déplacer entre :
- une première position, dite position inactive, associée à la position neutre dudit système réducteur, dans laquelle ledit au moins un élément est dépourvu de sollicitation de ladite couronne ou dudit secteur de couronne ; et
- au moins une deuxième position, dite position active, dans laquelle ledit au moins un élément est sollicité en déplacement par ladite couronne ou ledit secteur de couronne ; et
- au moins un organe de rappel solidaire dudit au moins un élément mobile de sorte que, sous l'effet dudit organe de rappel, un déplacement dudit au moins un élément mobile entraine un déplacement de ladite couronne ou dudit secteur de couronne. Une telle structure permet d'assurer simplement et efficacement le retour en position neutre du système réducteur et d'obtenir un couple « correct » sur la colonne de direction, et donc sur l'actionneur manuel.

Selon encore un autre aspect particulier de l'invention, ladite couronne ou ledit secteur de couronne présente au voisinage d'un bord périphérique un ergot disposé dans une cavité complémentaire prévue sur ledit au moins un élément mobile du mécanisme de retour de manière à lier le déplacement dudit au moins un élément mobile au déplacement de ladite couronne ou dudit secteur de couronne (ainsi, ladite couronne ou ledit secteur de couronne est configuré(e) pour entrainer en rotation le mécanisme de retour, et inversement).

Une telle implémentation permet d'éloigner l'ergot de l'axe de rotation de la couronne ou du secteur de couronne. Cette implémentation permet à l'ergot d'exercer un couple optimal sur le ou les éléments mobiles (prenant la forme de deux mâchoires dans un mode de réalisation) du mécanisme de retour. Cela se traduit notamment par la formation d'un retour en position neutre qualitatif améliorant l'expérience utilisateur. Selon un aspect particulier de l'invention, ladite base comprend un châssis situé entre ledit système réducteur et ledit mécanisme de retour, et en ce que ledit châssis présente une lumière courbe de guidage du déplacement dudit ergot porté par ladite couronne ou ledit secteur de couronne.

Selon un aspect particulier de l'invention, les extrémités de ladite lumière forment des butées de blocage du déplacement de ladite couronne (ou dudit secteur de couronne), donc des butées de blocage dudit système réducteur et donc de la colonne de direction. La mise en œuvre d'une lumière permet, grâce aux extrémités de ladite lumière, de stopper la rotation de la couronne (ou du secteur de couronne) lorsque cette dernière est en fin de course. Par exemple, lorsque l'actionneur manuel est tourné dans le sens horaire, la couronne tourne dans le sens anti-horaire, l'ergot de la couronne (ou du secteur de couronne) quitte la position neutre, et donc le centre de la lumière, pour progressivement se déplacer vers l'extrémité gauche de la lumière. Si l'utilisateur poursuit son mouvement de rotation sur l'actionneur manuel, l'ergot se déplace encore jusqu'à venir en contact contre l'extrémité gauche de la lumière, ce qui interrompt (ou bloque) le déplacement de la couronne (ou du secteur de couronne) du système réducteur en fin de course.

Selon un autre aspect particulier de l'invention, la mise en œuvre d'une telle lumière de forme courbe permet d'assurer le guidage en rotation de la couronne (ou du secteur de couronne). Cela permet notamment de garantir un déplacement correct de la couronne (ou du secteur de couronne). Cela se traduit par une amélioration de la fiabilité de fonctionnement du contrôleur. Le châssis est donc multifonctions en ce qu'il sert notamment pour rigidifier la structure de la base, et assure aussi une fonction de butée de la couronne ou du secteur de couronne contre le châssis et une fonction de guidage en rotation de la couronne ou du secteur de couronne.

Selon un autre aspect particulier de l'invention, ledit au moins un élément mobile présente un épaulement disposé dans ladite lumière, ledit épaulement définissant un moyen de guidage du déplacement dudit élément mobile entre ladite position inactive et ladite position active, et inversement.

Un tel épaulement permet notamment de contribuer, voire d'assurer, le guidage en rotation du ou des éléments mobiles du mécanisme de retour. Cela permet notamment de garantir un déplacement correct des éléments mobiles du mécanisme de retour. Cela se traduit par une amélioration de la fiabilité de fonctionnement du contrôleur.

Selon encore un autre aspect particulier de l'invention, ledit mécanisme de retour comprend deux mâchoires opposées et mobiles entre :
- ladite position inactive, dans laquelle les extrémités libres des mâchoires sont rapprochées, et
- ladite position active, dans laquelle lesdites extrémités libres des mâchoires sont espacées angulairement,
ledit contrôleur comprenant au moins un moyen de blocage configuré pour maintenir en position inactive la mâchoire non sollicitée en rotation par ladite couronne ou ledit secteur de couronne lorsque l'autre mâchoire est en position active de sorte que ledit organe de rappel génère une force de rappel tendant à ramener ladite autre mâchoire en position inactive.

Un mécanisme de retour à deux mâchoires est tel que le déplacement de la couronne (ou du secteur de couronne) dans le sens horaire entraine la rotation d'une première des deux mâchoires, la deuxième mâchoire restant pour sa part fixe, et la rotation de la couronne (ou du secteur de couronne) dans le sens anti-horaire entraine la rotation de la deuxième mâchoire, la première mâchoire restant fixe. La mâchoire sollicitée par la couronne (ou le secteur de couronne) lors de la rotation de cette dernière est ramenée en position inactive sous l'effet de l'organe de rappel. Une telle configuration permet en outre d'avoir en permanence une mâchoire en position inactive (ou d'équilibre). La mâchoire en position inactive forme de façon avantageuse une butée à l'autre mâchoire lors du retour de celle-ci en position inactive. Cela permet notamment de limiter les oscillations des mâchoires autour de la position inactive, et donc les vibrations dans l'actionneur manuel. Une limitation des oscillations permet d'éviter une usure prématurée du mécanisme de retour. Par ailleurs, une limitation des vibrations permet d'améliorer le confort de l'utilisateur.

Le rappel de la couronne ou du secteur de couronne par les mâchoires assure en outre une vitesse adaptée de la colonne de direction et de l'actionneur manuel associé. Selon un aspect particulier de l'invention, lesdites extrémités libres des mâchoires présentent chacune au moins une surface de contact avec la mâchoire opposée, tout ou partie desdites surfaces de contact portant au moins un patin d'amortissement.

La mise en œuvre d'un ou de plusieurs patins d'amortissement permet de réduire davantage les oscillations du mécanisme de retour en amortissant le contact entre les deux mâchoires lors du retour de ces dernières en position inactive. Cela permet notamment de contribuer à la pérennité du fonctionnement du contrôleur. Une telle configuration permet en outre de réduire le bruit du mécanisme de retour. Une diminution des nuisances sonores permet de contribuer au confort de l'utilisateur, qui peut ainsi davantage apprécier la simulation vidéo.

Selon un autre aspect particulier de l'invention, lesdites mâchoires présentent respectivement au moins un espace creux de réception d'une portion dudit au moins un organe de rappel.

Une telle configuration permet de faciliter le montage (le remplacement) de l'organe de rappel sur les mâchoires. La mise en œuvre d'un ou de plusieurs espaces creux permet de guider la mise en position de l'organe de rappel sur les mâchoires, et de loger au moins partiellement, l'organe de rappel dans les mâchoires. Cela assure un maintien optimal de l'organe de rappel sur les mâchoires, et ce même lorsque l'organe de rappel est sollicité en tension dû à la rotation de l'actionneur manuel.

Selon encore un autre aspect particulier de l'invention, lesdites mâchoires présentent respectivement trois évidements de réception d'au moins une portion d'extrémité dudit au moins un organe de rappel,
lesdits trois évidements étant répartis le long desdites mâchoires,
et ladite au moins une portion d'extrémité coopérant avec au moins un desdits évidements.

Une telle implémentation permet d'ajuster la sensibilité du mécanisme de retour, et donc celle de la force de rappel de l'actionneur manuel. Un tel ajustement est réalisé notamment en sélectionnant le nombre d'organes de rappel, la longueur initiale de chaque organe de rappel, les caractéristiques intrinsèques de chaque organe de rappel (diamètre, constante de raideur, etc.). Par exemple, l'utilisateur peut choisir de mettre en œuvre un unique organe de rappel élastique serpentant entre les évidements de sorte à prendre sensiblement une forme de « S ». Selon un autre exemple, l'utilisateur peut choisir de mettre en œuvre un, deux ou trois organes de rappel. Dans cet exemple, chaque organe de rappel relie les évidements des mâchoires situés en regard l'un de l'autre ; les organes de rappel sont ainsi disposés de manière parallèle les uns par rapport aux autres.

Selon un aspect particulier de l'invention, lesdites mâchoires présentent respectivement une surface externe convexe de sorte que, en position inactive, lesdites mâchoires forment sensiblement un cylindre, et en ce que ledit au moins un organe de rappel est disposé sur les surfaces externes desdites mâchoires.

Une telle forme arrondie des surfaces extérieures des mâchoires permet une disposition tangentielle de l'organe de rappel sur les mâchoires. Cela permet notamment d'éviter que l'organe de rappel ne perturbe le retour en position inactive des mâchoires.

Selon un autre aspect particulier de l'invention, lesdites mâchoires présentent chacune une surface interne concave de sorte que, en position inactive, lesdites surfaces internes définissent sensiblement un logement interne creux.

Outre le fait de réduire la masse des mâchoires, et par conséquent celui du contrôleur, une telle configuration permet d'utiliser le logement interne pour y loger des éléments d'ossature et de fixation de la base. Cela permet donc de s'affranchir, à tout le moins réduire, la mise en œuvre de tel éléments d'ossature et de fixation autour du mécanisme de retour. Il est ainsi possible de réduire le volume de la base, et donc de réduire l'encombrement du contrôleur. Par ailleurs, avec une telle configuration, l'accès aux mâchoires par l'utilisateur est facilité. Celui-ci peut donc aisément manipuler le ou les organes de rappel, notamment pour remplacer celui ou ceux détériorés ou bien pour ajuster la force de rappel en ajoutant ou retirant un organe de rappel. Une telle configuration permet également de simplifier la maintenance du contrôleur.

Selon un autre aspect particulier de l'invention, le contrôleur comprend plusieurs étages de butées permettant d'interrompre la rotation des éléments du système réducteur lorsque ceux-ci parviennent en fin de course selon une rotation dans le sens horaire ou bien anti-horaire de l'actionneur manuel et comprenant un premier étage de butées situé entre la colonne de direction et la deuxième roue satellite, un deuxième étage situé entre la deuxième roue satellite et la couronne ou le secteur de couronne, et un troisième étage situé entre le couronne ou un secteur de couronne et un châssis solidaire de la base.

La mise en œuvre de butées rotatives permet d'interrompre la rotation d'un élément du système réducteur, et donc de la colonne de direction lorsque le système réducteur est en fin de course selon une rotation dans le sens horaire ou anti-horaire de l'actionneur manuel. En d'autres termes, de telles butées assurent la reprise des forces de contact du système réducteur. De telles butées permettent donc d'éviter une dégradation intempestive et prématurée du système réducteur. Cela se traduit par conséquent par une amélioration de la durée de vie du contrôleur ainsi que par un fonctionnement optimal de celui-ci. Par ailleurs, des butées rotatives permettent d'optimiser l'encombrement et assurent une meilleure efficacité du mécanisme de butées.

Selon un autre aspect particulier de l'invention, chacune des faces opposées de ladite deuxième roue satellite comprend des éléments de butée faisant partie des premier et deuxième étage de butées respectivement agencés pour interrompre le déplacement de ladite deuxième roue satellite, par rapport audit premier engrenage solidaire de ladite colonne de direction et par rapport à ladite couronne ou audit secteur de couronne, lorsque le système réducteur est en fin de course.

Le choix de disposer les butées sur les faces opposées de la deuxième roue satellite surmonte un préjugé puisqu'il est a priori contraire à l'objectif de minimiser l'encombrement, un tel ajout augmentant l'épaisseur de la deuxième roue satellite de chaque côté. Toutefois, disposer les butées sur les faces opposées de la deuxième roue permet à cette deuxième roue satellite d'effectuer plus d'un tour (car tout son diamètre est utilisé par sa denture) et permet en outre de réduire l'encombrement du système réducteur en optimisant son rayon (l'espace inutilisé à l'intérieur du système réducteur, c'est-à-dire l'espace qui est sans fonction, est réduit).

De surcroit, une telle configuration permet notamment de répartir les forces de contact de fin de course entre les différents éléments mobiles du système réducteur. En d'autres termes, avec une telle configuration, lorsque l'actionneur manuel est en fin de course, la deuxième roue satellite entre simultanément en butée contre la colonne de direction formant un premier étage de butées, et contre la couronne (ou le secteur de couronne), formant un deuxième étage de butées. Chaque étage de butées est ainsi apte à absorber des forces de contact plus importantes. Cela se traduit notamment par une amélioration de la robustesse du système réducteur ce qui contribue à la pérennité du contrôleur.

Selon différentes mises en œuvre possibles, ledit actionneur manuel appartient au groupe comprenant les volants, les guidons, et les barres à roue de bateau.

L'invention concerne également une base destinée à former avec un actionneur manuel mobile en rotation par rapport à ladite base, un contrôleur de jeu vidéo ou de simulation tel que décrit précédemment.

### 5. Liste des figures

D'autres caractéristiques et avantages de l'invention apparaîtront à la lecture de la description suivante de modes de réalisation, donnés à titre de simples exemples illustratifs et non limitatifs, et des dessins annexés, parmi lesquels :
- [Fig.1A] : la figure 1A illustre, selon une vue en perspective avant, un contrôleur de jeu ou de simulation selon un mode de réalisation particulier de l'invention ;
- [Fig.1B] : la figure 1B illustre le contrôleur de jeu ou de simulation de la figure 1A, sans le capot supérieur de la base et sans le capot avant de la base ;
- [Fig. 1C] : la figure 1C est une autre vue du contrôleur de jeu ou de simulation de la figure 1A, sans le capot supérieur de la base, sans le capot avant de la base et sans l'actionneur manuel et dans laquelle une partie de la base est représentée en transparence pour des raisons de clarté ;
- [Fig.2] : la figure 2 est une vue en éclatée partielle du contrôleur de jeu ou de simulation des figures précédentes ;
- [Fig.3] : la figure 3 est une vue en perspective partielle du contrôleur de jeu ou de simulation des figures précédentes mettant en évidence le système réducteur ;
- [Fig.4] : la figure 4 est une vue en coupe longitudinale partielle du contrôleur de jeu ou de simulation de la figure 3 mettant en évidence le système réducteur et le mécanisme de retour associé ;
- [Fig.5] : la figure 5 est une vue en coupe transversale, selon le plan A-A défini sur la figure 4, montrant un premier étage de butées du système réducteur du contrôleur de jeu ou de simulation et montrant une variante du secteur de couronne ;
- [Fig.6] : la figure 6 est une vue en coupe transversale, selon le plan B-B défini sur la figure 4, montrant un second étage de butées du système réducteur du contrôleur de jeu ou de simulation et montrant une variante du secteur de couronne;
- [Fig.7] : la figure 7 est une vue de détail du contrôleur de jeu ou de simulation des figures 5 à 6 montrant les premier et second étages de butées lorsque le système réducteur est en fin de course et où une partie du système réducteur du contrôleur est représentée en transparence (ce qui devrait être caché par cette partie transparente est donc visible et représenté en traits continus) ;
- [Fig.8] : la figure 8 est une vue partielle en coupe transversale du contrôleur de jeu ou de simulation de la figure 1A mettant en évidence le mécanisme de retour dans une position inactive ;
- [Fig.9] : la figure 9 est une vue partielle du contrôleur de jeu ou de simulation de la figure 1A mettant en évidence le mécanisme de retour dans une position active et où une partie du châssis du contrôleur de jeu est représentée en transparence ;
- [Fig.10] : la figure 10 est une vue en perspective arrière du mécanisme de retour isolé dans la position inactive ;
- [Fig.11] : la figure 11 est une vue partielle en coupe transversale du contrôleur de jeu ou de simulation de la figure 1A montrant une partie du mécanisme de retour lors du fonctionnement du contrôleur ;
- [Fig.12] : la figure 12 illustre, selon une première vue en coupe transversale, des positions successives du premier étage de butées du système réducteur lors du fonctionnement du contrôleur de jeu ou de simulation de l'invention ;
- [Fig.13] : la figure 13 illustre, selon une deuxième vue en coupe transversale, des positions successives du second étage de butées du système réducteur lors du fonctionnement du contrôleur de jeu ou de simulation de l'invention.

### 6. Description détaillée de l'invention

### 6.1 Principe général

La base des contrôleurs de jeu vidéo à colonne de direction est couplée à un actionneur manuel qui est généralement un guidon ou un volant permettant à l'utilisateur de faire varier la trajectoire du véhicule simulé.

D'autres types d'actionneurs manuels peuvent bien sûr être envisagés, par exemple pour simuler le contrôle d'un bateau, d'un aéronef, d'un vaisseau spatial, ...

De manière connue, et pour plus de réalisme, la colonne de direction est couplée à un système réducteur de sorte à permettre à l'actionneur manuel d'être tourné à plus de 360°. On parle dans ce cas de contrôleurs multi-tours.

Le principe de l'invention consiste à mettre en œuvre un nouveau type de système réducteur comprenant un train épicycloïdal comprenant un porte satellite bloqué par rapport au socle du contrôleur.

La mise en œuvre d'un tel train épicycloïdal permet notamment de réduire l'encombrement et la masse du système réducteur.

### 6.2 Description détaillée d'un mode de réalisation illustratif

Dans le mode de réalisation décrit par la suite, il est décrit un contrôleur de jeu ou de simulation qui peut transformer les mouvements appliqués sur la partie préhensible (également appelée actionneur manuel) par l'utilisateur en données numériques qui sont transmises au logiciel de jeu vidéo ou de simulation. L'actionneur manuel est ici un volant (du type volant de voiture de grand tourisme) détachable de la colonne de direction. Cet actionneur manuel peut être remplacé par un autre actionneur manuel (par exemple, du type volant de tracteur) pour mieux correspondre à un autre véhicule simulé, ou pour le temps de la réparation de l'actionneur manuel d'origine. Pour simplifier la compréhension de l'invention, l'actionneur manuel n'est pas représenté sur certaines figures qui seront décrites par la suite.

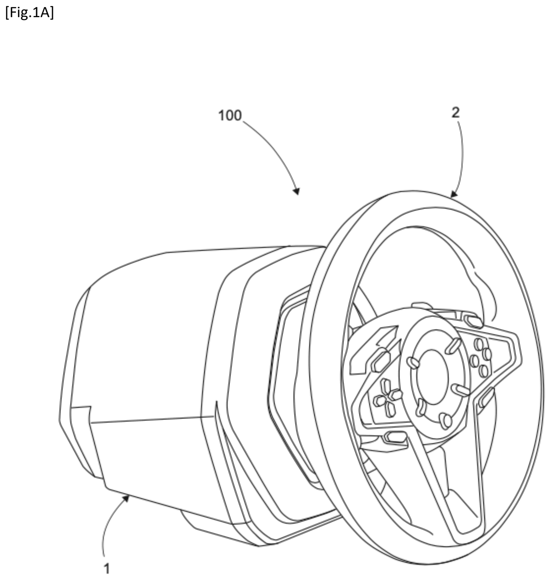

Les figures 1A à 11 illustrent, selon différentes vues, les aspects structurels des éléments constitutifs d'un contrôleur de jeu ou de simulation conforme à un mode de réalisation de l'invention.

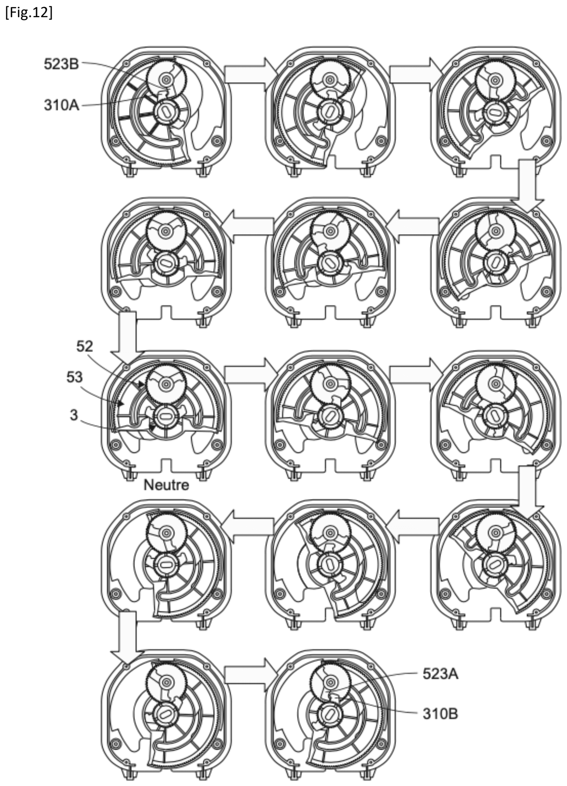

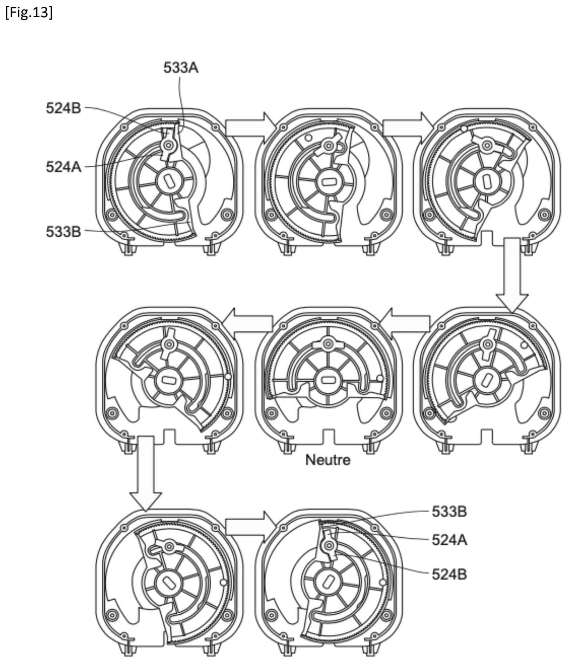

Les figures 12 et 13 illustrent, selon différentes vues, des aspects du fonctionnement du contrôleur de jeu ou de simulation conforme à ce mode de réalisation de l'invention.

Dans un premier temps, sont décrites chaque pièce constitutive du contrôleur de jeu ou de simulation, de manière isolée et à l'état statique. Cependant, certaines pièces sont brièvement décrites à l'état dynamique, en particulier leurs interactions avec d'autres pièces, afin de simplifier la compréhension de leur fonctionnement. Le fonctionnement dynamique du contrôleur de jeu ou de simulation dans son ensemble est décrit dans un second temps.

La figure 1A illustre un contrôleur 100 de jeu vidéo selon un mode de réalisation de l'invention, le contrôleur 100 comprenant une base 1 et un actionneur manuel 2, sous la forme d'un volant mobile en rotation.

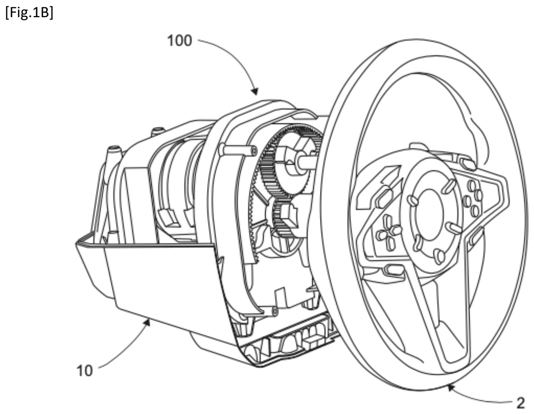

La figure 1B est une vue de ce même contrôleur 100 sans le capot supérieur de la base 1 et sans le capot avant de la base 1.

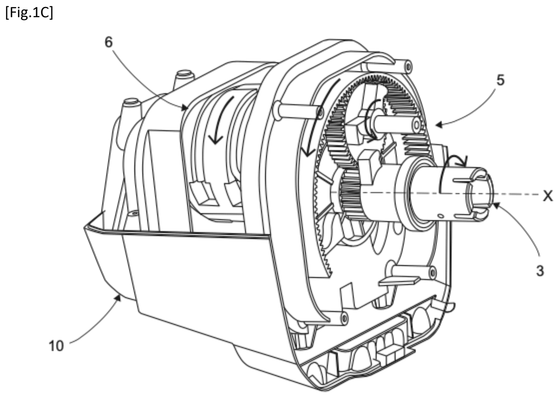

La figure 1C est une autre vue de ce même contrôleur 100 sans le capot supérieur de la base 1, sans le capot avant de la base 1 et sans l'actionneur manuel 2, et dans laquelle une partie de la base 1 est représentée en transparence pour des raisons de clarté.

Comme visible sur les figures 1A à 1C, l'actionneur manuel 2, un volant dans cet exemple, est monté à une extrémité d'une colonne de direction 3 portée par un socle 10 fixe de cette base 1.

La colonne de direction 3 est mobile en rotation par rapport au socle 10 autour d'un axe X longitudinal de rotation. La colonne de direction 3 a une forme essentiellement tubulaire.

Le capot avant et le capot supérieur de la base 1 (qui ont été retirés sur ces figures 1B et 1C) viennent se fixer sur le socle 10 pour former un carter de protection de la colonne de direction 3, d'un système réducteur 5 et d'un mécanisme de retour 6 notamment qui sont décrits plus en détails par la suite.

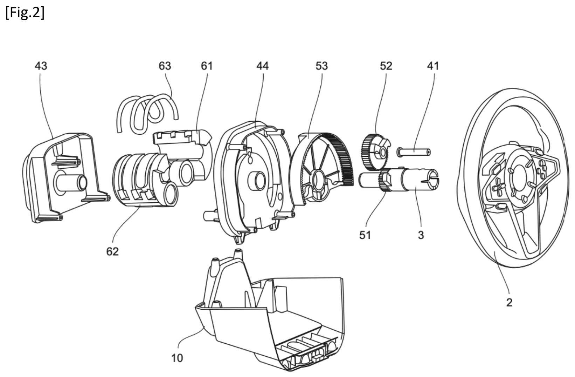

La figure 2 est une vue en éclatée partielle du contrôleur de jeu des figures 1A à 1C sur laquelle sont visibles notamment la colonne de direction 3, les éléments 51 à 53 du système réducteur 5, les éléments 61 à 63 du mécanisme de retour 6, un bâti 43 prenant la forme d'une plaque et un châssis 44 prenant également la forme d'une plaque munie d'une forme tubulaire (cette forme tubulaire est disposée de façon orthogonale par rapport à cette plaque et la traverse , et de ce fait la forme tubulaire n'est pas obstruée), ces différents éléments de la base 1 étant supportés par le socle 10 une fois assemblés.

Il convient de rappeler que l'actionneur manuel 2, comme tout volant de voiture de grand tourisme, est mobile en rotation dans le sens horaire (vers la droite) et le sens anti-horaire (vers la gauche). Cela permet de simuler un contrôle du volant d'une voiture de grand tourisme.

Par ailleurs, la colonne de direction 3, qui s'étend selon un axe X longitudinal de rotation, est couplée à un système réducteur 5 multi-tours, qui permet à l'actionneur manuel 2 d'être tourné à plus de 360° autour de l'axe X.

L'actionneur manuel 2, et donc le système réducteur 5 associé, présentent une position centrale, également appelée position neutre. En position neutre, l'actionneur manuel 2 est dépourvu de sollicitation de l'utilisateur pour permettre au véhicule simulé de se diriger en ligne droite.

Dans cet exemple, le système réducteur 5 permet à l'actionneur manuel 2 d'être tourné, à partir de la position neutre, à plus de 400° dans le sens horaire et à plus de 400° dans le sens anti-horaire.

Le système réducteur 5, davantage visible sur les figures 2 à 7, comprend dans ce mode de réalisation un premier engrenage prenant la forme d'une première roue 51 planétaire, un deuxième engrenage prenant la forme d'une deuxième roue 52 satellite et un secteur de couronne 53 extérieur. Autrement dit, le système réducteur 5 comprend un train épicycloïdal.

Dans ce mode de réalisation, le système réducteur 5 est formé d'engrenages, c'est-à-dire que la première roue 51 planétaire est dentée sur son bord périphérique, la deuxième roue 52 satellite est dentée sur son bord périphérique et le secteur de couronne 53 extérieur présente une denture intérieure 531. La mise en œuvre de dents d'engrenage permet notamment une transmission efficace des mouvements de rotation du système réducteur.

Par ailleurs, chaque élément du système réducteur 5 est agencé d'une manière particulière, décrite ci-après, par rapport à la colonne de direction 3 pour la première roue 51 planétaire, et par rapport au socle 10, pour la deuxième roue 52 satellite et le secteur de couronne 53.

Plus précisément, la première roue 51 planétaire est solidaire et montée fixe sur la colonne de direction 3 et s'étend autour de cette colonne à partir d'une position prédéterminée (environ à mi-distance entre l'extrémité destinée à coopérer avec le mécanisme de retour en position neutre et l'extrémité destinée à coopérer avec l'actionneur manuel 2). La rotation de l'actionneur manuel 2 entraine ainsi la rotation de la première roue 51 planétaire par le biais de la colonne de direction 3.

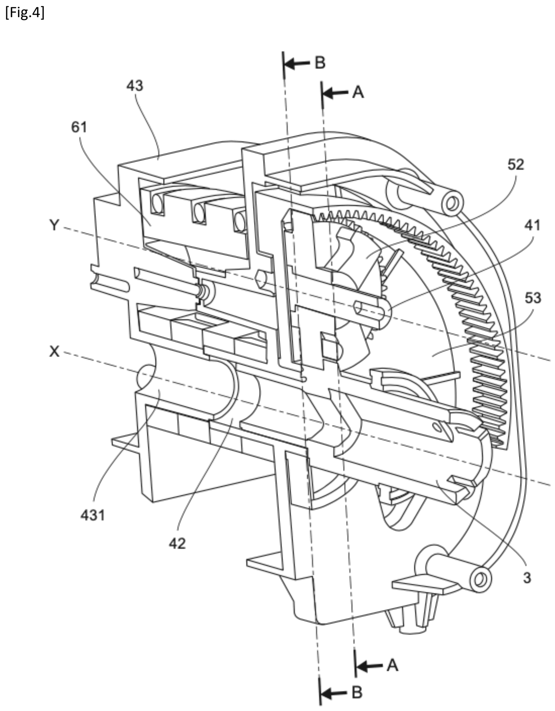

La deuxième roue 52 satellite est montée mobile en rotation sur un premier arbre 41 qui est solidaire du socle 10 et qui s'étend selon un axe Y longitudinal de rotation parallèle à la colonne de direction 3 (figure 4).

Dans le mode de réalisation illustré sur la figure 4, le premier arbre 41 pénètre d'un côté de la deuxième roue satellite 52 et s'étend jusqu'à affleurer la surface du côté opposé de la deuxième roue satellite 52. Le premier arbre 41 est logé dans et supporté par un logement aménagé dans le capot avant ; ce logement est relativement long (environ la moitié de la longueur du premier arbre 41) afin de garantir un bon support, donc un bon centrage du premier arbre 41 et une bonne longévité au système réducteur 5. Le premier arbre 41 est fixé au capot avant de la base 1 (ce capot avant est visible sur la figure 1A). Le capot avant de la base 1 est monté solidaire du socle 10 mais de façon réversible, ce qui permet d'ôter le capot avant du socle 10 afin d'accéder au système réducteur 5 et ainsi favoriser la réparabilité de la base 1.

Le premier arbre 41, qui s'étend donc selon l'axe Y longitudinal de rotation, est également situé à une distance prédéterminée de la colonne de direction 3 de sorte que la première roue 51 planétaire coopère avec la deuxième roue 52 satellite. La première roue 51 planétaire est configurée pour entrainer en rotation la deuxième roue 52 satellite autour de l'axe Y, et inversement.

Dans un tel agencement du système réducteur, le premier arbre 41, formant porte-satellite, est bloqué. Aucun mouvement de rotation de ce premier arbre 41 portant la deuxième roue 52 satellite n'est possible autour de la première roue 51 planétaire. La deuxième roue 52 satellite est mobile en rotation autour de l'axe Y par rapport au socle 10 et par rapport à la première roue 51 mais la deuxième roue 52 satellite ne tourne pas autour de l'axe X, et donc aucun mouvement de rotation de ce premier arbre 41 autour de la colonne de direction 3 n'est possible.

Le secteur de couronne 53 extérieur est monté mobile en rotation autour de l'axe X longitudinal de rotation sur un deuxième arbre 42 solidaire du socle 10. Le deuxième arbre 42 est disposé de manière coaxiale avec la colonne de direction 3 et s'étend ainsi selon l'axe longitudinal X. Le deuxième arbre 42 est tubulaire. Le deuxième arbre 42 est d'un diamètre extérieur légèrement inférieur au diamètre intérieur du secteur de couronne 53. Le deuxième arbre 42 est d'un diamètre intérieur légèrement supérieur au diamètre extérieur de la colonne de direction 3. Cela permet au diamètre intérieur du deuxième arbre 42 de guider en rotation la colonne de direction 3, et au diamètre extérieur du deuxième arbre 42 de guider en rotation le secteur de couronne 53.

Le secteur de couronne 53 est agencé de sorte que la deuxième roue 52 satellite coopère avec la denture intérieure 531 du secteur de couronne 53. Ainsi, la deuxième roue 52 satellite est configurée pour entrainer en rotation le secteur de couronne 53, et inversement. Le secteur de couronne 53 extérieur est donc mobile en rotation autour de l'axe longitudinal X par rapport à la colonne de direction 3.

De par ce système réducteur 5, une rotation de la colonne de direction 3 selon une valeur d'angle donnée entraine une rotation du secteur de couronne 53 selon une autre valeur d'angle inférieure à la valeur d'angle donnée selon un ratio de réduction prédéterminé. Du fait de la mise en œuvre d'un train épicycloïdal, ce ratio de réduction est un ratio de réduction total RRT composé.

Plus précisément, une rotation de l'actionneur manuel 2 et donc une rotation de la colonne de direction 3 selon une première valeur d'angle entraine une rotation de la deuxième roue 52 satellite selon une deuxième valeur d'angle, la deuxième valeur d'angle étant inférieure à la première valeur d'angle selon un premier ratio de réduction prédéterminé. Ainsi, la première roue 51 planétaire et la deuxième roue 52 satellite définissent un premier étage de réduction présentant un premier ratio de réduction RR_{E1} déterminé par la formule mathématique suivante : ${RR}_{E 1} = \frac{nombre de dents de la premi è re roue 51 plan è taire}{nombre de dents de la deuxi è me roue 52 satellite}$

Par ailleurs, une rotation de la deuxième roue 52 satellite selon la deuxième valeur d'angle entraine une rotation du secteur de couronne 53 selon une troisième valeur d'angle, la troisième valeur d'angle étant inférieure à la deuxième valeur d'angle selon un deuxième ratio de réduction prédéterminé.

Ainsi, la deuxième roue 52 satellite et le secteur de couronne 53 définissent un second étage de réduction présentant un second ratio de réduction RR_{E2} déterminé par la formule mathématique suivante : ${RR}_{E 2} = \frac{nombre de dents de la deuxi è me roue 52 satellite}{nombre de dents d ′ une couronne 53 }$

Il convient de noter que le nombre de dents d'une couronne 53 qui s'étendrait sur 360° est déterminé en proportion (application d'une règle de proportionnalité ou règle de trois) de l'angle couvert par le secteur de couronne 53 extérieur et du nombre de dents du secteur de couronne 53.

Le ratio de réduction total RRT du système réducteur 5 est donc déterminé par la formule mathématique suivante : $RRT = {RR}_{E 1} . {RR}_{E 2}$

La troisième valeur d'angle est donc inférieure à la première valeur d'angle selon un ratio de réduction total prédéterminé.

Le système réducteur 5 permet de transformer une rotation de l'actionneur manuel 2 selon une première valeur VR₂ en une rotation du secteur de couronne 53 selon une deuxième valeur VR₅₃ inférieure à la première valeur VR₂ par application de la formule mathématique suivante : ${VR}_{53} = RRT . {VR}_{2}$

Selon le nombre de tours NdT2 de l'actionneur manuel 2 souhaité, la deuxième valeur maximale VRM₅₃ de rotation du secteur de couronne 53 est déterminée par la formule : ${VRM}_{53} = RRT .360 . {NdT}_{2}$

Le ratio de réduction total RRT est prédéterminé en fonction de divers paramètres, tels que le nombre de tours de l'actionneur manuel 2 souhaité, une contrainte d'intégration du système réducteur 5 dans la base 1 et/ou une contrainte de tenue mécanique des éléments constitutifs du système réducteur 5.

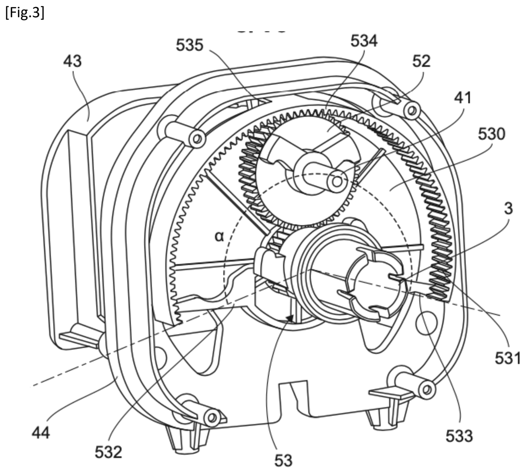

Par ailleurs, dans ce mode de réalisation, le système réducteur 5 met en œuvre un secteur de couronne 53 qui s'étend selon un angle α prédéterminé visible sur la figure 3 plutôt qu'une couronne entière qui s'étend sur 360°.

Autrement dit, le secteur de couronne 53 est un secteur de disque comprenant ici une paroi de fond 530 pleine (figure 3). Sur le bord en arc de cercle de cette paroi de fond 530 pleine s'étend perpendiculairement à celle-ci un rebord 534 périphérique. A cette paroi de fond 530 pleine s'ajoutent des renforts qui s'étendent radialement jusqu'au rebord 534 périphérique. Bien que cette paroi de fond et ces renforts augmentent la masse du secteur de couronne, ils lui confèrent une bonne résistance aux efforts exercés par l'utilisateur et donc une grande longévité. Par ailleurs, une denture intérieure 531 est disposée sur la surface intérieure de ce rebord 534 périphérique. Le pourtour du secteur de couronne 53 en forme de demi-cercle dans cet exemple est ainsi formé par le rebord 534 périphérique, porté par le bord en arc de cercle, et deux côtés 532, 533 convergeant vers le centre de rotation du secteur de couronne 53.

L'angle α du secteur de couronne 53 doit présenter une valeur *a minima* égale à la deuxième valeur VRM₅₃ afin que la base 1 du contrôleur 100 soit fonctionnelle. Cela ressortira plus clairement de l'exemple concret décrit ultérieurement.

La mise en œuvre d'un secteur de couronne, c'est-à-dire une couronne partielle, permet de limiter la quantité de matériau utilisé pour sa fabrication et donc le coût de fabrication du contrôleur. Cette configuration permet en outre de limiter le débattement du secteur de couronne 53 et donc de simplifier son intégration dans une base 1 de dimensions limitées. Cela se traduit donc par une réduction de la masse et de l'encombrement (environ 6,7 centimètres de rayon et 8,2 centimètres de profondeur en incluant les butées) du système réducteur 5, et donc du contrôleur 100 dans lequel il est mis en œuvre.

Dans ce mode de réalisation, le contrôleur 100 présente plusieurs mécanismes de butée permettant d'interrompre la rotation des éléments du système réducteur 5 lorsque ceux-ci parviennent en fin de course selon une rotation dans le sens horaire ou bien anti-horaire de l'actionneur manuel 2.

De tels mécanismes de butée assurent la reprise des forces de contact du système réducteur 5. Cela se traduit donc par une réduction de l'usure intempestive et prématurée du système réducteur 5. Cela permet entre autres de garantir un fonctionnement correct du contrôleur 100.

Plus précisément, des butées de fin de course sont réparties en plusieurs étages de butées, à savoir un premier étage situé entre la colonne de direction 3 et la deuxième roue 52 satellite, et un deuxième étage situé entre la deuxième roue 52 satellite et le secteur de couronne 53 ; un troisième étage est situé entre le secteur de couronne 53 et le châssis 44.

Une telle configuration permet de répartir les forces de contact de fin de course entre les étages de butées. Chaque étage de butées est ainsi apte à absorber des forces de contact plus importantes. Cela se traduit notamment par une tenue mécanique du système réducteur 5 plus élevée, et donc par une amélioration de la longévité du contrôleur 100.

Dans ce mode de réalisation, le premier étage de butées et le second étage de butées présentent un agencement particulier, décrit ci-après, permettant notamment d'assurer une répartition équilibrée des forces de contact.

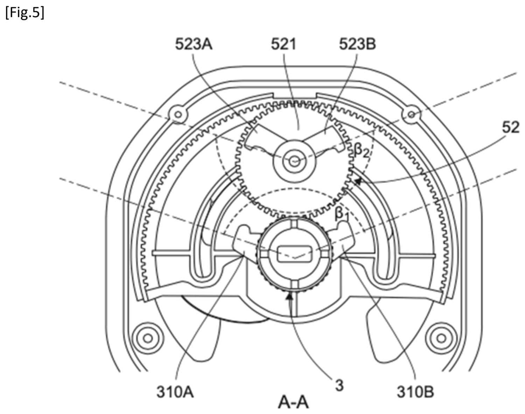

Pour ce faire, le premier étage de butées, davantage visible sur la figure 5 notamment, est formé par des première et seconde saillies 310A, 310B, aménagées sur la colonne de direction 3, et des première et seconde nervures 523A, 523B, aménagées sur une première face 521 de la deuxième roue 52 satellite du système réducteur 5 orientée vers l'actionneur manuel 2.

Les première et seconde saillies 310A, 310B s'étendent vers l'extérieur de la colonne de direction 3 au-delà du rayon de la colonne de direction 3 ; les saillies 310A, 310B sont relativement volumineuses, grandes. Les première et seconde saillies 310A, 310B qui sont accolées à la première roue 51 planétaire et s'étendent longitudinalement (selon l'axe longitudinal X vers l'actionneur 2) et radialement (de manière radiale par rapport à l'axe X de rotation de la colonne de direction 3), sont espacées angulairement l'une de l'autre selon un premier angle β₁ d'une valeur prédéterminée. Les première et seconde saillies 310A, 310B sont agencées de manière symétrique par rapport à un plan de symétrie (non représenté) passant par l'axe X de rotation de la colonne de direction 3 et la bissectrice du premier angle β₁. En d'autres termes, les première et seconde saillies 310A, 310B sont disposées de manière à former sensiblement un « V ». Les première et seconde saillies 310A, 310B de la colonne de direction 3 sont rotatives puisqu'elles sont sur la colonne de direction 3 qui est rotative -la colonne de direction 3 agit (sur la deuxième roue 52 satellite) en tournant-.

Les première et seconde nervures 523A, 523B de la deuxième roue 52 satellite s'étendent vers l'extérieur de la deuxième roue 52 satellite sur la majeure partie de son rayon (sans aller au-delà de son rayon) ; les nervures sont donc relativement volumineuses, grandes. Les première et seconde nervures 523A, 523B s'étendent longitudinalement (d'un premier côté ou face 521, que l'on appelle « avers » ou « recto », de la deuxième roue 52 satellite, selon l'axe Y qui est parallèle à l'axe longitudinal X de rotation de la colonne de direction 3, vers l'actionneur 2) et radialement (de manière radiale par rapport à l'axe Y de rotation de la deuxième roue 52 satellite). Les première et seconde nervures 523A, 523B sont espacées l'une de l'autre d'un deuxième angle β₂ d'une valeur prédéterminée. Les première et seconde saillies 523A, 523B sont agencées de manière symétrique par rapport à un plan de symétrie (non représenté) passant par l'axe Y de rotation de la deuxième roue 52 satellite et la bissectrice du deuxième angle β₂. Les première et seconde nervures 523A, 523B de la deuxième roue 52 satellite sont rotatives puisqu'elles sont sur -un côté de- la deuxième roue 52 satellite qui est rotative.

Les valeurs des premier et deuxième angles β₁, β₂ sont déterminées de sorte que les saillies 310A, 310B et les nervures 523A, 523B entrent en contact uniquement lorsque le système réducteur 5 est en fin de course. Autrement dit, les saillies 310A, 310B et les nervures 523A, 523B ne perturbent pas la rotation de la deuxième roue 52 satellite, et donc le fonctionnement de la base du contrôleur 1, lorsque le système réducteur 5 n'est pas tourné au maximum (dans le sens horaire ou anti-horaire).

Bien évidemment, l'homme du métier comprendra aisément que les valeurs des premier et deuxième angles β₁, β₂ sont susceptibles de varier, notamment en fonction du nombre de tours de l'actionneur manuel souhaité.

Les figures 12 et 13 sont deux sections différentes d'un même mouvement de la colonne de direction du contrôleur.

La figure 12 montre les positions successives du premier étage de butées du système réducteur lors du fonctionnement du contrôleur 100. La figure 13 montre les positions successives du second étage de butées du système réducteur lors du fonctionnement du contrôleur 100. Le sens de lecture de ces figures est donné par les flèches.

Tant sur la figure 12 que sur la figure 13, la colonne de direction 3 tourne de la position la plus à droite à la position la plus à gauche, c'est-à-dire dans le sens anti-horaire. On rappelle que l'actionneur manuel 2 (l'actionneur manuel est ici un volant qui n'est pas représenté sur les figures 12 et 13) porté par la colonne de direction 3 et le secteur de couronne 53 tournent dans des directions opposées.

Tel qu'illustré sur la première vignette de la figure 12 (vignette située en haut et à gauche sur la figure 12), lorsque la colonne de direction 3 est en fin de course dans le sens horaire (du point de vue de l'utilisateur qui tourne l'actionneur manuel 2 et donc la colonne de direction 3), la première saillie 310A est en prise avec la seconde nervure 523B. Inversement, lorsque la colonne de direction 3 est en fin de course angulaire dans le sens anti-horaire (du point de vue de l'utilisateur qui tourne l'actionneur manuel 2), la seconde saillie 310B est en prise avec la première nervure 523A comme visible sur la dernière vignette de la figure 12 (vignette située en bas et à droite).

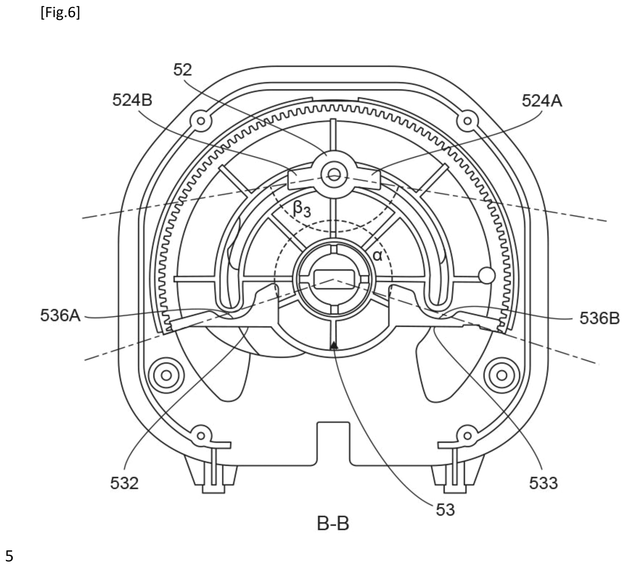

Le second étage de butées, davantage visible sur la figure 6 notamment, est formé par des premier et second taquets 524A, 524B, portés par une seconde face 522 de la deuxième roue 52 satellite opposée à la première face 521, et des premier et second renforts 533A, 533B ménagés sur les côtés 532, 533 du secteur de couronne 53.

Les premier et second taquets 524A, 524B de la deuxième roue 52 satellite s'étendent vers l'extérieur de la deuxième roue 52 satellite sur la majeure partie de son rayon, sans aller toutefois au-delà de son rayon. Les taquets sont donc relativement volumineux ou grands. Les premier et second taquets 524A, 524B s'étendent longitudinalement (d'un second côté ou face 522, que l'on appelle « revers » ou « verso », de la deuxième roue 52 satellite, selon l'axe Y qui est parallèle à l'axe longitudinal X de rotation de la colonne de direction 3, vers la paroi de fond 530 du secteur de couronne 53) et radialement (de manière radiale par rapport à l'axe Y de rotation de la deuxième roue 52 satellite). Les premier et second taquets 524A, 524B sont espacés l'un de l'autre d'un troisième angle β₃ d'une valeur prédéterminée. Les premier et second taquets 524A, 524B sont agencées de manière symétrique par rapport à un plan de symétrie (non représenté) passant par l'axe Y de rotation de la deuxième roue 52 satellite et la bissectrice du troisième angle β₃. Les premier et second taquets de la deuxième roue 52 satellite sont rotatifs puisqu'ils sont sur -un autre côté de- la deuxième roue 52 satellite qui est rotative.

Les premier et second renforts 533A, 533B s'étendent à l'intérieur du secteur de couronne 53 jusqu'à occuper la majeure partie de son rayon. Les premier et second renforts 533A, 533B s'étendent longitudinalement (d'un premier côté, que l'on appelle « avers » ou « recto », du secteur de couronne 53, selon l'axe longitudinal X de rotation de la colonne de direction 3, vers l'actionneur 2) et radialement (de manière radiale par rapport à l'axe X de rotation du secteur de couronne 53). Les premier et second renforts du secteur de couronne 53 sont rotatifs puisqu'ils sont sur le secteur de couronne 53 qui est rotatif -le secteur de couronne 53 agit (sur les mâchoires 61, 62) en tournant-. Les premier et second renforts 533A, 533B sont agencés de manière symétrique par rapport à un plan de symétrie (non représenté) passant par l'axe X de rotation du secteur de couronne 53 et la bissectrice de l'angle α.

La valeur du troisième angle β₃ est déterminée de sorte que les taquets 524A, 524B et les renforts 533A, 533B entrent en contact uniquement lorsque le système réducteur 5 est en fin de course.

Tel qu'illustré sur la première vignette de la figure 13 (vignette située en haut et à gauche sur la figure 13), lorsque la colonne de direction 3 est en fin de course dans le sens horaire (du point de vue de l'utilisateur qui tourne l'actionneur manuel 2 et donc la colonne de direction 3), les premier et second taquets 524A, 524B sont simultanément en prise avec le premier renfort 533A. Inversement, lorsque la colonne de direction 3 est en fin de course dans le sens anti-horaire (du point de vue de l'utilisateur qui tourne l'actionneur manuel 2), les premier et second taquets 524A, 524B sont simultanément en prise avec le second renfort 533B comme visible sur la dernière vignette de la figure 13 (vignette située en bas et à droite).

Dit autrement, la deuxième roue 52 satellite porte sur chacune de ses faces 521, 522 opposées des éléments formant butées mécaniques.

Ainsi, lorsque la colonne de direction 3 est en fin de course angulaire, c'est-à-dire lorsque l'actionneur manuel 2 est tourné au maximum (à gauche ou à droite), la deuxième roue 52 satellite est simultanément en butée contre la colonne de direction 3 et contre le secteur de couronne 53 extérieur.

Les butées de la deuxième roue 52 satellite sont longitudinales ainsi que les butées des autres éléments du système réducteur 5 (les butées 310A, 310B de la première roue 51 planétaire et les butées 533A et 533B du secteur de couronne 53 sont longitudinales), ce qui permet aux butées du même étage de coopérer et de partager un même espace sans blocage jusqu'à la fin de course du système réducteur, et cela dans un sens ou dans l'autre sens, parce qu'elles sont symétriques.

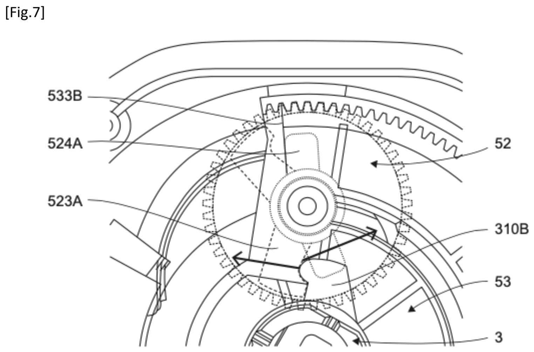

Par ailleurs, avec l'agencement particulier des étages de butées décrit précédemment, les taquets 524A, 524B de la deuxième roue 52 satellite subissent des forces de contact opposées aux forces de contact reçues par les nervures 523A, 523B de cette même roue. Les forces de contact réparties sur la deuxième roue 52 satellite sont ainsi équilibrées, tel qu'illustré sur la figure 7 notamment.

Les figures 12 et 13 montrent ainsi le mouvement de synchronisation des butées qui s'évitent pendant toute la course et ne se synchronisent qu'en fin de course ; toutes les butées du système réducteur 5 coïncident en fin de course du système réducteur 5, ce qui sécurise la fin de course de la colonne de direction 3.

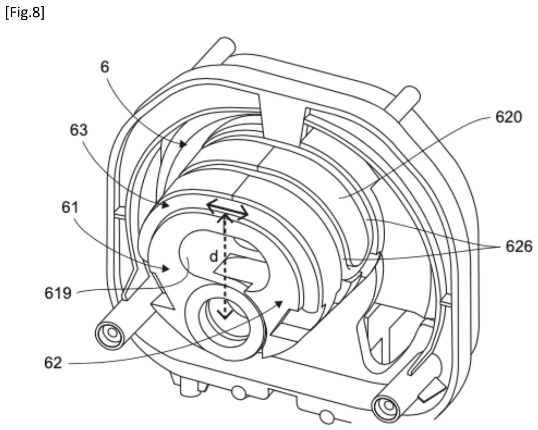

Le contrôleur 100 de ce mode de réalisation comprend en outre un mécanisme de retour 6 du système réducteur 5 dans la position neutre en l'absence de sollicitation de l'actionneur manuel 2. En l'absence de sollicitation de l'actionneur manuel 2, le mécanisme de retour 6 est dans une position équilibrée (illustrée en figure 8), également appelée position inactive par la suite, permettant de maintenir le système réducteur 5 dans la position neutre.

Pour ce faire, le mécanisme de retour 6 comprend des première et seconde mâchoires 61, 62 opposées et mobiles en rotation autour de l'axe X.

Les première et seconde mâchoires 61, 62 présentent respectivement une première extrémité 611, 621, montée mobile en rotation sur le deuxième arbre 42 et sur un troisième arbre 431 tubulaire s'étendant depuis la paroi du bâti 43 qui est solidaire du socle 10, et une deuxième extrémité 612, 622, dite extrémité libre. Le troisième arbre 431 est disposé de manière coaxiale avec le deuxième arbre 42 et avec la colonne de direction 3 et s'étend selon l'axe longitudinal X. Le troisième arbre 431, le deuxième arbre 42, et la colonne de direction 3 étant coaxiaux et tubulaires, un passage est créé entre l'arrière du bâti 43 et l'extrémité de la colonne de direction 3 qui permet le passage d'un câble ou de fils électriques depuis l'actionneur manuel 2 (par exemple, pour la connexion et l'alimentation d'une carte électronique logée dans l'actionneur manuel 2 et comprenant, par exemple, un capteur gyroscopique mesurant la rotation de l'actionneur manuel 2, un microcontrôleur traitant les données, et une puce de contrôle USB (Universal Serial Bus)) jusqu'à l'arrière du bâti 43 et au-delà jusqu'à un micro-ordinateur ou une console de jeux.

Le deuxième arbre 42 est donc multifonctions en ce qu'il guide en rotation la colonne de direction 3, en ce qu'il guide en rotation le secteur de couronne 53, en ce qu'il guide en rotation une partie du mécanisme de retour 6, et en ce qu'il sert de passage d'éléments électriques.

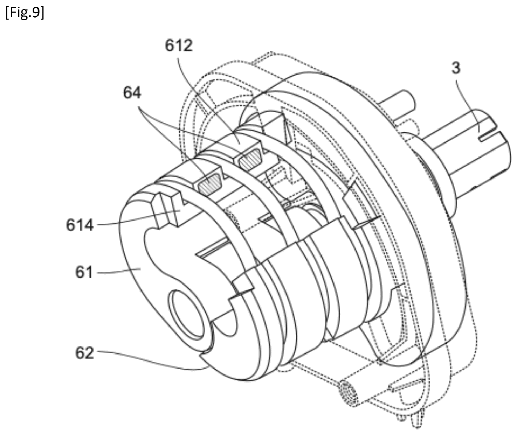

Les mâchoires 61, 62 sont mobiles entre :
- une première position, dite position inactive, associée à la position neutre du système réducteur 5, dans laquelle les extrémités libres 612, 622, des mâchoires 61, 62 sont rapprochées, tel qu'illustré en figure 8, et
- une deuxième position, dite position active, dans laquelle les extrémités libres 612, 622 des mâchoires 61, 62 sont espacées angulairement, tel qu'illustré en figure 9.

Les mâchoires 61, 62 sont par ailleurs configurées pour coopérer avec le secteur de couronne 53 du système réducteur 5 de telle sorte que, depuis la position neutre du système réducteur 5, une rotation du secteur de couronne 53 dans le sens horaire (du point de vue de l'utilisateur qui tourne l'actionneur manuel 2) entraine une rotation d'une première mâchoire 61 dans le sens horaire. Inversement, depuis la position neutre du système réducteur 5, une rotation du secteur de couronne 53 dans le sens anti-horaire (du point de vue de l'utilisateur qui tourne l'actionneur manuel 2) entraine une rotation d'une seconde mâchoire 62 dans le sens anti-horaire.

Pour ce faire, le secteur de couronne 53 présente un ergot 535 configuré pour coopérer avec un épaulement 613, 623 complémentaire ménagé sur l'extrémité libre 612, 622 de chacune des première et seconde mâchoires 61, 62. Les épaulements 613, 623 sont disposés l'un en regard de l'autre et définissent entre eux une cavité 600 dans laquelle est disposé l'ergot 535 du secteur de couronne 53.

Le mécanisme de retour 6 comprend en outre un organe 63 de rappel solidaire des première et seconde mâchoires 61, 62. L'organe 63 de rappel est configuré pour exercer une force de rappel des deux mâchoires 61, 62 vers la position inactive.

Dans ce mode de réalisation, l'organe 63 de rappel est un cordon élastique réalisé au moins en partie en élastomère. Selon une mise en œuvre possible, une tresse en fibres synthétiques (polyester, etc.) ou naturelle (coton, lin) est disposée autour de l'âme élastique.

Une telle structure de l'organe 63 de rappel permet notamment de limiter les frottements et de réduire le bruit du mécanisme de retour 6. Cela permet notamment de limiter les bruits parasites susceptibles d'occasionner une gêne pour l'utilisateur. Cela se traduit donc par une amélioration de l'expérience utilisateur.

Dans une variante de réalisation, l'organe 63 de rappel est une bande élastique.

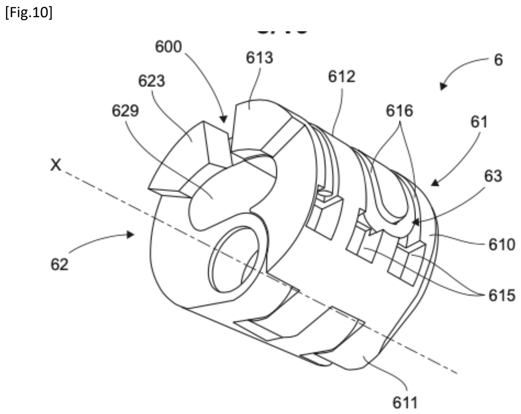

Cet organe 63 de rappel est solidarisé aux mâchoires 61, 62 par le biais d'évidements 615, 625 respectivement, davantage visibles sur la figure 10. Les évidements 615, 625 assurent ainsi l'ancrage de l'organe 63 de rappel sur les mâchoires 61, 62.

Plus précisément, chaque mâchoire 61, 62 présente une surface externe 610, 620 sur laquelle sont ménagés plusieurs évidements 615, 625. Les évidements 615, 625 sont répartis le long des mâchoires 61, 62 respectivement, c'est-à-dire selon un axe parallèle à l'axe X. En outre, les évidements 615 de la première mâchoire 61 sont situés en regard des évidements 625 de la seconde mâchoire 62.

Les surfaces externes 610, 620 des mâchoires 61, 62 présentent en outre des rainures 616, 626 qui définissent un chemin de passage de l'organe 63 de rappel. Le chemin de passage de l'organe 63 de rappel présente dans cet exemple des portions rectilignes reliées par des portions de liaison courbes.

Dans ce mode de réalisation, l'organe 63 de rappel, qui est logé dans certaines des rainures 616, 626 des mâchoires 61, 62, présente des extrémités maintenues en position dans deux des évidements 615, 625.

Une telle configuration permet de répartir la force de rappel de l'organe de rappel sur des mâchoires 61, 62. Une telle configuration permet ainsi un rappel efficace des mâchoires en position inactive. Cela se traduit notamment par un amortissement des oscillations de l'actionneur manuel 2 autour de la position neutre lorsque le système réducteur 5 revient brusquement en position neutre et par une amélioration de la réactivité, de la fiabilité et de la pérennité du mécanisme de rappel 6, et donc du contrôleur 100 associé.

Une telle configuration, à savoir disposer l'organe 63 de rappel sur les surfaces externes 610, 620 des mâchoires 61, 62, permet notamment de simplifier l'accès et le remplacement d'un organe de rappel défectueux ou qui ne correspond pas aux exigences de l'utilisateur du contrôleur 100, et permet à l'utilisateur de régler un paramètre de fonctionnement selon ses préférences et/ou habitudes d'utilisation.

Afin de faciliter l'accès à l'organe de rappel 63 et aux mâchoires 61, 62, la base 1 du contrôleur 100 comporte un capot supérieur de fermeture qui est représenté sur la figure 1A. Ce capot supérieur de fermeture du socle est monté amovible sur le socle 10 de la base 1. L'accès à l'organe de rappel 63 et aux mâchoires 61, 62 peut ainsi se faire simplement en retirant ledit capot supérieur de fermeture du socle. L'utilisateur peut ainsi aisément installer ou retirer le ou les d'organes de rappel 63 dans tout ou partie des rainures 616, 626 et des évidements 615, 625, changer des patins 64 d'amortissement (décrits ci-après), etc.

Par ailleurs, le socle 10 porte des moyens de blocage 442 configurés pour maintenir en position inactive la mâchoire 61, 62 non sollicitée en rotation par l'ergot 535 du secteur de couronne 53.

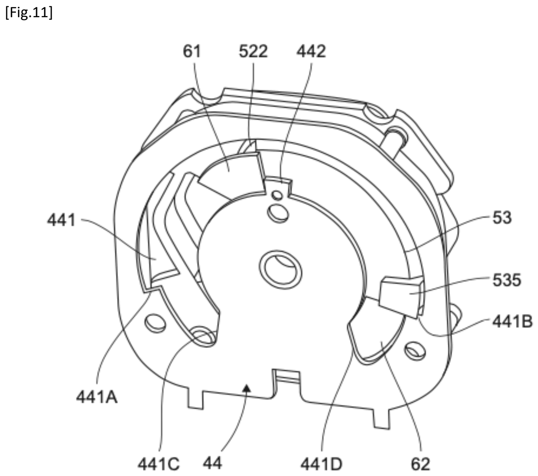

De tels moyens de blocage 442, davantage visibles sur la figure 11, sont nécessaires pour permettre à l'organe 63 de rappel d'être déformé (en l'occurrence étiré) lors de la rotation de la mâchoire 61 ou 62 sollicitée par le secteur de couronne 53. L'organe 63 de rappel déformé génère ainsi une force de rappel sur la mâchoire 61 ou 62 sollicitée afin de ramener celle-ci en position inactive.

Outre la fonction de ramener le système réducteur 5 en position neutre, une telle force de rappel permet d'améliorer l'expérience utilisateur. En effet, en tendant à reprendre sa position d'équilibre, le mécanisme de retour 6 génère une force opposée à la force induite par le système réducteur 5. Cela se traduit par la création d'une résistance dans la manipulation de l'actionneur manuel 2.

Dans ce mode de réalisation, la base 1 comprend un châssis 44 porté par le socle 10, situé entre le système réducteur 5 et le mécanisme de retour 6, à l'intérieur duquel est ménagée une lumière 441 courbe (débouchant de part et d'autre de la paroi du châssis 44). Le châssis 44 comporte la forme tubulaire constituant le deuxième arbre 42.

La lumière 441 courbe comporte 2 courbures concentriques dont les rayons et secteurs angulaires diffèrent. Chacune des courbures est agencée de manière symétrique par rapport à un plan de symétrie (non représenté) passant par l'axe X de rotation de la colonne de direction 3 et la bissectrice de leur secteur angulaire respectif.

Dans cette lumière 441 sont disposés en partie l'ergot 535 du secteur de couronne 53 et les épaulements 613, 623 des mâchoires 61, 62 de sorte à permettre la coopération entre le système réducteur 5 et le mécanisme de retour 6.

L'ergot 535 s'étend à l'extérieur du secteur de couronne 53. L'ergot 535 s'étend longitudinalement à travers la lumière 441 d'un second côté, que l'on appelle « revers » ou « verso », du secteur de couronne 53, selon un axe qui est parallèle à l'axe longitudinal X de rotation de la colonne de direction 3, et s'étend radialement sur une portion du rayon du secteur de couronne 53. L'ergot 535 est rotatif puisqu'il est sur le secteur de couronne 53 qui est rotatif.

La lumière 441 est configurée, d'une part, pour guider le déplacement des mâchoires 61, 62 et, d'autre part, pour interrompre le déplacement du secteur de couronne 53 en fin de course.

À cet effet, la lumière 441 présente deux extrémités 441A, 441B opposées formant butées contre lesquelles vient buter l'ergot 535 du secteur de couronne 53 au cours de son déplacement en rotation dans un sens ou dans l'autre. Les deux extrémités 441A, 441B opposées de la lumière 441 forment ainsi des butées de blocage du déplacement de l'ergot 535 du secteur de couronne 53, et donc des butées de blocage du déplacement du secteur de couronne 53 (donc, indirectement, du déplacement de la colonne de direction 3, et du déplacement de l'actionneur manuel 2, par conséquent). L'ergot 535 du secteur de couronne et l'une des extrémités de la lumière 441 entrent en contact uniquement lorsque le système réducteur 5 est en fin de course. Par ailleurs, avec cet agencement particulier, le secteur de couronne subit des forces de contact opposées aux forces de contact reçues soit par le premier renfort 533A (la surface d'arrêt 536B), soit par le second renfort 533B du secteur de couronne 53 (la surface d'arrêt 536A). Les forces de contact réparties sur le secteur de couronne 53 sont ainsi équilibrées.

Tel qu'illustré sur la figure 11, lorsque la colonne de direction 3 est déplacée en rotation, la lumière 441 guide la rotation de l'une des mâchoires 61, 62 (celle qui est sollicitée par l'ergot 535 du secteur de couronne 53) entre la position inactive et la position active, et inversement.

Lorsque la colonne de direction 3 est en fin de course dans le sens horaire (du point de vue de l'utilisateur qui tourne l'actionneur manuel 2 et donc la colonne de direction 3), l'ergot 535 du secteur de couronne 53 est en butée contre la seconde extrémité 441B de la lumière 441 tel que visible sur la figure 11.

Inversement, lorsque la colonne de direction 3 est en fin de course dans le sens anti-horaire (du point de vue de l'utilisateur qui tourne l'actionneur manuel 2), l'ergot 535 du secteur de couronne 53 est en butée contre la première extrémité 441A de la lumière 441.

La lumière 441 présente également deux extrémités 441C, 441D opposées entre lesquelles sont disposés en partie les épaulement (613, 623) des mâchoires (61, 62).

Outre le fait que le châssis 44 contribue à la rigidité du socle 10, la lumière 441 forme un moyen de guidage de la rotation des mâchoires 61, 62 entre la position inactive et la position active, et inversement.

Un tel guidage permet notamment de garantir un déplacement correct des mâchoires 61, 62. Cela se traduit par une amélioration de la fiabilité de fonctionnement de la base du contrôleur 100.

Dans ce mode de réalisation, les extrémités libres 612, 622 des mâchoires 61, 62 présentent respectivement une surface de contact 614, 624 avec la mâchoire 61, 62 opposée. Sur au moins une desdites surfaces de contact 614, 624 sont disposés des patins 64 d'amortissement. De tels patins 64 d'amortissement, réalisés en un matériau souple, permettent de réduire les oscillations en amortissant le contact entre les deux mâchoires 61, 62 lors de leur retour en position inactive.

Par ailleurs, dans ce mode de réalisation, les surfaces externes 610, 620 des mâchoires 61, 62 présentent une forme convexe, et plus précisément courbe dans l'exemple illustré. Ainsi, en position inactive, les mâchoires 61, 62 forment sensiblement un cylindre.

Un tel arrondi des surfaces extérieures des mâchoires 61, 62 permet une disposition tangentielle de l'organe 63 de rappel sur les mâchoires 61, 62. Cela permet notamment d'éviter que l'organe 63 de rappel ne perturbe le retour en position inactive des mâchoires 61, 62.

En outre, les mâchoires 61, 62 présentent des surfaces internes 619, 629 respectivement, opposées aux surfaces externes 610, 620. Les surfaces internes 619, 629 présentent une forme concave, arquée plus précisément. Ainsi, en position inactive des mâchoires 61, 62, les surfaces internes forment un logement interne creux prenant ici la forme d'un cylindre.

Une telle géométrie des mâchoires permet notamment de minimiser l'encombrement (environ 8,80 centimètres de largeur, 8 centimètres de hauteur et 7,70 centimètres de profondeur) du mécanisme de retour 6 et donc d'optimiser son intégration à l'intérieur de la base 1 du contrôleur 100. En outre, le creux intérieur du cylindre permet l'insertion et le montage d'élément structurel ou de renfort du socle 10.

Dans l'exemple illustré, la colonne de direction 3 et la première roue 51 planétaire du système réducteur 5 sont réalisées de manière monobloc par le biais d'un procédé de moulage par injection utilisant du polyoxyméthylène (POM). De manière analogue, la deuxième roue 52 satellite et le secteur de couronne 53 sont réalisées en POM et sont obtenues par un procédé de moulage par injection.

Une telle configuration permet aux éléments du système réducteur 5 d'être robustes et présenter une forte résistance aux impacts. Cela permet également de limiter la masse du système réducteur 5. Bien évidemment, tout autre matériau, plastique notamment, permettant d'obtenir tout ou partie de ces effets peut être alternativement envisagé.

Dans cet exemple illustratif, la première roue 51 planétaire présente trente dents, la deuxième roue 52 satellite présente quarante-neuf dents et la denture intérieure 531 du secteur de couronne 53 présenterait théoriquement cent vingt-huit (128) dents si la couronne était complète (la denture intérieure 531 du secteur de couronne 53 présente par exemple 77 dents, dont 64 dents sur une portion de 180°).

Par application des formules mathématiques introduites précédemment, le premier ratio de réduction RR_{E1} du premier étage de réduction est d'approximativement 0,61 et le second ratio de réduction RR_{E2} du second étage de réduction est d'approximativement 0,38. Le système réducteur 5 présente ainsi un ratio de réduction total RRT d'approximativement 0,234. En d'autres termes, le système réducteur 5 transforme la rotation de l'actionneur manuel 2 d'une première valeur VR₂ de 360°, c'est-à-dire un tour complet, en une rotation du secteur de couronne 53 selon une deuxième valeur VR₅₃ de 84° approximativement. De ce fait, pour permettre à l'actionneur manuel 2 d'effectuer par exemple, un nombre de tour NbT₂ égal à 2.5, le secteur de couronne 53 doit pourvoir être mobile en rotation sur la deuxième valeur maximale VRM₅₃ de 210° approximativement.

Il ressort donc de ce qui précède que la mise en œuvre d'une couronne complète s'étendant sur 360°, bien que possible, n'est pas indispensable dans la technique proposée. En effet, il est nécessaire que l'angle α du secteur de disque formant le secteur de couronne 53 permette à l'actionneur manuel 2 d'effectuer le nombre de tour NbT2 souhaité. En d'autres termes, l'angle α du secteur de couronne 53 doit présenter une valeur *a minima* égale à la deuxième valeur maximale VRM₅₃, c'est-à-dire de 210° approximativement. Ainsi, dans cet exemple, le secteur de couronne 53 est sensiblement un demi-disque.

Par ailleurs, dans l'exemple illustré, chaque élément de butée de la colonne de direction 3, de la deuxième roue 52 satellite et du secteur de couronne 53 est formé lors du procédé de moulage de la pièce associée. Chaque élément de butée est donc réalisé d'un seul tenant avec la pièce associée. Outre le fait de simplifier l'assemblage de la base du contrôleur 1, cela permet de simplifier la fabrication d'éléments de butée de forme courbe.

Les première et seconde saillies 310A, 310B de la colonne de direction 3 et des première et seconde nervures 523A, 523B de la deuxième roue 52 comprennent des surfaces de butée 311A, 311B, 525A, 525B respectivement de forme courbe et complémentaires. En effet, tel qu'illustré en figures 5 et 12 notamment, les saillies 310A, 310B de la colonne de direction 3 comportent un bras qui s'étend essentiellement radialement (mais aussi tangentiellement et dans une moindre mesure longitudinalement), et qui se prolonge par une tête de forme arrondie convexe orientée de façon tangentielle. Le bras de chacune de ces saillies comporte une surface plane de butée 312A, 312B respectivement, et chacune des têtes de forme arrondie comporte une surface courbe de butée 311A, 311B respectivement. En outre, tel qu'illustré en figures 5 et 12 notamment, les première et seconde nervures 523A, 523B de la deuxième roue 52 comportent un bras arrondi qui s'étend essentiellement radialement (mais aussi tangentiellement et dans une moindre mesure longitudinalement) et qui se prolonge par une tête orientée de façon tangentielle. Le bras de chacune de ces nervures comporte une surface courbe concave de butée 525A, 525B respectivement, et la tête de chacune de ces nervures comporte une face dont la surface est plane.

Par conséquent, les surfaces d'arrêt sont complémentaires. Tel qu'illustré en figure 12, en fin de course du système réducteur, la tête de forme arrondie convexe de l'une des saillies de la colonne de direction 3 vient se loger dans la surface courbe concave de l'une des nervures de la deuxième roue 52 ; et la face plane de la tête de la même nervure vient en contact avec la surface plane de la même saillie de la colonne de direction. Autrement dit, une tête (ici, dotée d'une surface arrondie) d'une saillie de la colonne de direction est réceptionnée par un bras (ici, doté d'une surface concave complémentaire) d'une nervure de la deuxième roue 52, tandis qu'en même temps, une tête (ici, dotée d'une surface plane) de la même nervure est réceptionnée par le bras (ici, doté d'une surface plane) de la même saillie de la colonne de direction. La combinaison d'une surface d'arrêt plane et d'une surface d'arrêt courbe permet d'optimiser les surfaces de contact entre la colonne de direction et la deuxième roue satellite sans risque de coincement.

De la même façon, les premier et second taquets 524A, 524B de la deuxième roue 52 et les premier et second renforts 533A, 533B du secteur de couronne 53 comprennent des surfaces d'arrêt 526A, 526B, 536A, 536B respectivement de forme courbe et complémentaires. Tel qu'illustré en figures 7 et 13, les premier et second taquets 524A, 524B de la deuxième roue 52 consistent en fait en un moyeu muni de deux bras de taquet qui s'étendent essentiellement radialement (mais aussi tangentiellement et dans une moindre mesure longitudinalement). Le moyeu comporte deux surfaces arrondies convexes 526A, 526B (entre les bras de taquets) et chacun de ces bras de taquet comporte une surface plane.

Tel qu'illustré en figure 13, en fin de course du système réducteur, la forme arrondie convexe du moyeu de la deuxième roue 52 vient se loger dans une forme concave de l'un des renforts 533A, 533B du secteur de couronne 53 (contre l'une des surfaces d'arrêt 536A, 536B) ; tandis que les bras de taquet dont les surfaces sont planes viennent en contact avec ce renfort, de chaque côté de sa forme concave, sur des surfaces planes. La combinaison de deux surfaces d'arrêt planes et d'une surface d'arrêt courbe permet d'optimiser (ou augmenter) les surfaces de contact entre la deuxième roue satellite 52 et le secteur de couronne 53 sans risque de coincement, tout en étant réalisable par moulage par injection de matériau POM et donc d'une façon simple et pour un coût modique.

Les éléments de butée du premier étage de butées et du deuxième étage de butées présentent donc notamment des surfaces de contact complémentaires ayant des formes sensiblement convexes et concaves. Une telle configuration permet notamment d'augmenter la superficie des surfaces de butée et d'arrêt. Cela permet une meilleure répartition des forces de contact lorsque le système réducteur 5 est en fin de course. Cela se traduit notamment par une réduction du risque de dégradation, de rupture notamment, d'un ou de plusieurs éléments de butée (saillies, nervures, renforts, taquets).

En outre, l'ergot 535 est situé sur le bord 534 périphérique en forme d'arc de cercle du secteur de couronne 53. Cela permet d'éloigner l'ergot 535 de l'axe de rotation du secteur de couronne 53. Cette implémentation permet à l'ergot 535 d'exercer un couple optimal sur les mâchoires 61, 62 du mécanisme de retour 6.

Ainsi la structure de système réducteur à couronne permet à cette couronne d'un système réducteur à deux étages de constituer une bonne pièce de transmission vers le reste du système réducteur 5 (surtout vers l'actionneur manuel 2) et vers le mécanisme de retour 6, du fait qu'elle comporte un bon nombre de dents et une bonne distance entre ses dents et son axe de rotation (elle permet donc de réduire la vitesse de rotation de la couronne et donc de l'ergot 535, tout en recevant et exerçant, selon le cas, un couple optimal).

La colonne de direction 3 est multifonctions en ce qu'elle sert notamment d'extrémité destinée à recevoir l'actionneur manuel 2, en ce qu'elle participe à la fonction multi-tours (en comportant un élément (51) du système réducteur), en ce qu'elle participe à la protection du système réducteur (en comportant des butées 310A, 310B), et en ce qu'elle sert de support à une partie du système réducteur.

A l'état statique à vide (sans force exercée par l'utilisateur), la colonne de direction 3, le système réducteur 5, et le châssis 44 sont symétriques par rapport à un plan vertical et longitudinal incluant l'axe X longitudinal (et donc l'axe Y). Cette caractéristique permet un équilibre avantageux de la colonne de direction 3, du système réducteur 5, etc. L'équilibre est avantageux notamment en ce qu'il facilite les sous-assemblages, le montage de la base 1, la maintenance de la base 1 du contrôleur de jeu, et le changement de l'organe de rappel 63. L'équilibre permet également un bon ressenti de l'utilisateur (à angle de rotation de la colonne de direction égal dans un sens ou dans l'autre, les efforts qu'il exerce sont sensiblement les mêmes).

Toujours dans cet exemple illustratif, les mâchoires 61, 62 du mécanisme de retour 6 sont réalisées en un matériau plastique, et plus précisément en matériau POM. L'élément de rappel 63 est un cordon élastique réalisé en un matériau élastomère, tel du nitrile ou bien un assemblage de caoutchouc naturel, par exemple.

Les patins 64 d'amortissement sont également réalisés en un matériau élastomère, tel du nitrile ou bien une mousse silicone ou polyuréthane. Bien évidemment, tout autre matériau présentant des propriétés similaires peut être envisagé.

Les surfaces externes 610, 620 convexes et les surfaces internes 619, 629 concaves sont agencées de manière à permettre aux mâchoires 61, 62 de présenter, selon une coupe transversale, sensiblement la forme d'un « 6 ».

Dans cet exemple illustré, chaque mâchoire 61, 62 présente trois évidements 615, 625 d'ancrage permettant à l'organe 63 de rappel de prendre sensiblement une forme de « S » lorsque disposé dans les rainures 616, 626.

Par ailleurs, chaque mâchoire 61, 62 présente ici deux patins 64 d'amortissement.

Bien évidemment, le nombre et/ou la disposition du ou des patins d'amortissement sont susceptibles de varier, notamment en fonction des dimensions des mâchoires 61, 62.

Dans cet exemple, la colonne de direction 3 est reliée au socle 10 par le biais d'un palier, situé au voisinage de l'actionneur manuel 2, afin de supporter les forces de rotation. Bien évidemment, le nombre et/ou la disposition du ou des paliers sont susceptibles de varier, notamment en fonction des dimensions de la colonne de direction.

### 6.3 Autres variantes et modes de réalisation non représentés

Dans un exemple de variante illustré par les figures 5, 6, 12 et 13, le secteur de couronne comporte en plus une ouverture arquée 537 (c'est-à-dire une ouverture en forme d'arc de cercle) aménagée dans la paroi de fond 530 du secteur de couronne 53. Cette ouverture arquée 537 permet le passage d'une version plus longue du premier arbre 41 qui peut alors s'insérer dans un trou débouchant (qui est visible sur la figure 11 en dessous du moyen de blocage 442) qui est aménagé dans le châssis 44 pour recevoir l'extrémité de cet arbre 41 qui située est à l'opposé de l'extrémité fixée au capot avant. Le premier arbre 41, qui est toujours bloqué en rotation et solidaire du socle 10 (et qui s'étend toujours selon un axe Y longitudinal de rotation parallèle à la colonne de direction 3), coopère avec le châssis 44 et avec le capot avant de la base 1 pour rigidifier la structure de la base 1. Le bord de l'ouverture arquée 537 est renforcé, le rebord est en forme de « T », cette forme de rebord s'étendant longitudinalement de chaque côté de la paroi 530 pour renforcer la structure du secteur de couronne 53, et pour augmenter la surface de contact aux extrémités 538A, 538B de l'ouverture arquée. Dans cette variante, le premier arbre 41, en coopérant avec le bord en forme de « T » de l'ouverture arquée 537, forme un moyen de guidage de la rotation du secteur de couronne 53. Dans cette variante, les extrémités de l'ouverture arquée du secteur de couronne 53 coopèrent avec le premier arbre 41 ; l'une de ces extrémités entre en contact avec le premier arbre 41 uniquement lorsque le système réducteur 5 est en fin de course. En effet, le premier arbre 41, qui porte la roue satellite 52, reste fixe tandis que les extrémités 538A, 538B de l'ouverture arquée se déplacent en rotation dans le sens horaire ou anti-horaire, jusqu'à la position de fin de course du système réducteur 5. En position de fin de course du système réducteur 5, une portion de la surface courbe concave du premier l'arbre 41 est en contact avec la surface courbe complémentaire, convexe, de l'une des extrémités 538A, 538B de l'ouverture arquée 537. Ici, le secteur de couronne 53 comporte donc trois types de butées rotatives, à savoir l'ergot 535, les premiers et seconds renforts 533A, 533B, et les extrémités 538A, 538B de l'ouverture arquée 537. Les extrémités 538A, 538B de l'ouverture arquée du secteur de couronne 53 sont rotatives puisqu'elles sont sur le secteur de couronne 53 qui est rotatif.

Dans l'exemple illustré, le premier arbre 41 est fixé au capot avant de la base 1 par une vis, mais il pourrait être fixé au capot avant par emmanchement forcé, ou par une clavette, ou par une goupille. Le premier arbre 41 comporte des formes essentiellement cylindriques car il comporte, à son extrémité qui est à l'opposé de l'extrémité insérée dans la deuxième roue satellite 52, un méplat qui coopère avec un logement aménagé dans le capot avant ; ce logement n'est donc pas totalement cylindrique, il est seulement essentiellement cylindrique car il comporte une forme intérieure complémentaire qui coopère avec le méplat du premier arbre afin de bloquer en rotation le premier arbre. La vis complète la fixation du premier arbre au capot avant en bloquant en translation le premier arbre.

Dans l'exemple illustré, les éléments constitutifs du système réducteur et les mâchoires du mécanisme de retour sont réalisés en matériau POM. Bien évidemment, tout autre matériau présentant des propriétés semblables peut alternativement être envisagé, tel que le Polyamide.

Dans l'exemple illustré, la colonne de direction, la première roue planétaire du système réducteur, la deuxième roue satellite, et le secteur de couronne sont obtenues par un procédé de moulage par injection. Selon un autre exemple, toutes ou parties de ces pièces sont obtenues par un procédé d'impression 3D.

Dans l'exemple illustré, la valeur de l'angle de la couronne est d'approximativement 200°. Toutefois, selon des simulations de plusieurs variantes du système réducteur de la technique proposée, non illustrées, la valeur de l'angle de la couronne peut avantageusement être comprise dans un intervalle de 150 à 250°. Cela permet de minimiser le coût et l'encombrement du système réducteur tout en permettant à celui-ci de réaliser la fonction multi-tours.

Dans l'exemple illustré, les éléments de butée de chaque étage sont réalisés en un matériau plastique et sont obtenus par un procédé de moulage avec la pièce associée (colonne de direction, deuxième roue et couronne).

Selon un autre exemple, les éléments de butée de chaque étage sont obtenus par un procédé d'impression 3D.

Selon un autre exemple, non illustré, les éléments de butée sont en un matériau métallique et sont fixés sur la pièce associée. Une telle configuration permet notamment d'inscrire le contrôleur de la technique proposée dans une démarche écologique. En effet, en cas de dégradation voire de rupture d'un élément de butée, il est possible de le remplacer sans devoir remplacer l'intégralité de la pièce associée (dont certaines autres parties peuvent demeurer fonctionnelles). Un tel agencement permet donc d'améliorer la réparabilité et d'accroître la longévité de la base du contrôleur.

Dans l'exemple illustré, les éléments de butée de chaque étage présentent des surfaces de contact complémentaires ayant des formes convexes et concaves.

Selon un autre exemple, non illustré, les surfaces de contact complémentaires sont planes. Un tel agencement permet notamment de simplifier la conception du contrôleur.

Dans l'exemple illustré, l'ergot est situé sur le bord périphérique arqué du secteur de couronne et fait saillie selon l'axe de rotation dudit secteur de couronne. En d'autres termes, l'ergot est compris dans la superficie du secteur de couronne.

Dans un autre exemple, non représenté, l'ergot est situé au-delà du bord périphérique du secteur de couronne et fait saillie de manière radiale par rapport à l'axe de rotation dudit secteur de couronne. En d'autres termes, l'ergot est supplémentaire à la superficie du secteur de couronne. Dans ce cas, l'ergot peut être rapporté et fixé sur le secteur de couronne ou alors obtenu d'un seul tenant avec celui-ci, par moulage par exemple. Un tel positionnement de l'ergot permet notamment d'améliorer la tenue mécanique de la base du contrôleur, par exemple en s'affranchissant de la lumière ménagée dans le châssis solidaire du socle.

Dans l'exemple illustré, les première et seconde mâchoires sont montées mobiles en rotation sur un deuxième arbre et sur un troisième arbre qui sont disposés de manière coaxiale. Selon un autre exemple, le deuxième et le troisième arbre forment une seule pièce réalisée de manière monobloc, de sorte que les première et seconde mâchoires 61, 62 sont montées sur un seul et même arbre.

Dans l'exemple illustré, l'organe de rappel est logé dans certaines des rainures et évidements des mâchoires de manière à définir sensiblement un « S ».

Selon un autre exemple, il n'y a pas ou plus d'organe de rappel. Par exemple, l'utilisateur peut avoir enlevé cet organe de rappel (dans ce cas, à moins que l'utilisateur n'ait enlevé également les mâchoires, les mâchoires s'ouvrent et restent ouvertes).

L'agencement des évidements et des rainures décrit dans le mode de réalisation illustré permet néanmoins la mise en œuvre de plusieurs organes de rappel ou d'un organe de rappel positionné différemment. Cela permet d'ajuster la raideur de l'organe de rappel et donc la force de rappel entre les mâchoires. Cela permet de personnaliser le fonctionnement du contrôleur, et cela permet donc à l'utilisateur de régler un paramètre de fonctionnement selon ses préférences et/ou habitudes d'utilisation, ici pour modifier la fermeté du retour de la colonne de direction en position neutre.

Dans le mode de réalisation illustré, le système réducteur comprend un secteur de couronne, c'est-à-dire une couronne présentant une structure de révolution partielle.

Toutefois, dans un autre mode de réalisation non représenté, le système réducteur comprend une couronne intégrale ou quasi-intégrale pour augmenter le nombre de tours possibles du volant.

Dans le mode de réalisation illustré, le système réducteur comprend plusieurs engrenages formés par la première roue dentée, la deuxième roue dentée et la couronne extérieure présentant une denture intérieure.

Dans un mode de réalisation, non illustré, le contrôleur est dépourvu de mécanisme de retour afin de limiter les coûts et/ou l'encombrement du contrôleur.

Dans le mode de réalisation illustré, les mâchoires présentent des surfaces externes convexes et des surfaces internes concaves.

Dans un autre mode de réalisation, non représenté, tout ou partie de ces surfaces sont planes. La mise en œuvre de surfaces internes planes permet notamment la mise en œuvre de patins d'amortissement plus nombreux et/ou de dimensions plus importantes.

Dans un autre mode de réalisation, non représenté, les mâchoires sont dépourvues de patins d'amortissement afin de limiter les coûts et/ou la masse du contrôleur.

Dans un autre mode de réalisation, non illustré, les mâchoires sont dépourvues de mécanisme de guidage en rotation. Dans ce cas de figure, seul l'ergot de la couronne traverse la lumière arquée du châssis.

Dans un autre mode de réalisation, la lumière arquée qui est ménagée dans la paroi du châssis solidaire du socle permet de former un moyen de guidage de la rotation de l'ergot de la couronne et/ou permet, via ses extrémités, de former des butées de fin de course au déplacement des mâchoires. Il n'est cependant pas indispensable que les mâchoires soient en butée lorsqu'elles parviennent en fin de course. En effet, en fin de course, le système réducteur est déjà en butée.

Dans un autre mode de réalisation non représenté, l'élément de rappel est un ressort métallique.

Dans un mode de réalisation, non illustré, des butées amovibles sont placées de chaque côté de l'ergot du secteur de couronne afin de permettre à l'utilisateur d'ajuster (réduire notamment) la course maximale du secteur de couronne en montant ces butées amovibles pour que l'amplitude maximale de rotation de l'actionneur manuel corresponde à la rotation maximale d'un actionneur manuel du véhicule simulé.

A cet effet, des tôles métalliques minces sont collées de chaque côté (horaire et anti-horaire) de l'ergot du secteur de couronne et sur la paroi arrière du secteur de couronne et les butées amovibles en ABS ou en POM comportent un ou plusieurs logements (dont le nombre est fonction de la longueur d'arc de la butée) munis chacun d'un aimant solidaire de la butée amovible. Ledit ou lesdits aimants maintiennent en position la butée amovible par rapport au secteur de couronne tant que l'utilisateur n'enlève pas la butée amovible.

Les deux extrémités opposées de la lumière forment ainsi des butées de blocage du déplacement de l'ergot du secteur de couronne et donc des butées amovibles dont l'ergot est alors muni. Lorsque la colonne de direction est en fin de course souhaitée par l'utilisateur, l'une des butées amovibles est en butée contre l'une des extrémités de la lumière.

Bien évidemment, l'invention n'est pas limitée aux modes de réalisation et variantes décrits précédemment et fournis uniquement à titre d'exemple. Elle englobe diverses modifications, formes alternatives et autres variantes que pourra envisager l'homme du métier dans le cadre de la présente invention et notamment toutes combinaisons des différents modes de fonctionnement décrits précédemment, pouvant être pris séparément ou en association.

## Revendications

1. Contrôleur (100) de jeu vidéo ou de simulation comprenant une base (1) et un actionneur manuel (2) mobile en rotation par rapport à ladite base (1), ledit actionneur manuel (2) étant couplé à une colonne de direction (3) rotative de ladite base (1) de façon à simuler au moins un contrôle de la rotation d'un organe de commande d'un véhicule simulé, ladite colonne de direction (3) étant couplée à un système réducteur (5) multi-tours de ladite base (1), **caractérisé en ce que** ledit système réducteur (5) comprend au moins les éléments suivants:
- un premier engrenage (51) solidaire de ladite colonne de direction (3) ;
- un deuxième engrenage (52) mobile en rotation sur un premier arbre (41), ledit premier engrenage (51) étant configuré pour entrainer ledit deuxième engrenage (52), une rotation de ladite colonne de direction (3) selon une première valeur d'angle entrainant une rotation dudit deuxième engrenage (52) selon une deuxième valeur d'angle, ladite deuxième valeur d'angle étant inférieure à ladite première valeur d'angle selon un premier ratio prédéterminé; et
- une couronne ou un secteur de couronne (53) mobile en rotation sur un deuxième arbre (42), ledit deuxième engrenage (52) étant configuré pour entrainer ladite couronne ou ledit secteur de couronne (53),
une rotation de ladite colonne de direction (3) selon une première valeur d'angle entrainant une rotation de ladite couronne ou dudit secteur de couronne (53) selon une troisième valeur d'angle, ladite troisième valeur d'angle étant inférieure à ladite deuxième valeur d'angle selon un deuxième ratio prédéterminé.

2. Contrôleur (100) selon la revendication 1, **caractérisé en ce que** :
- ledit premier engrenage (51) est une première roue planétaire solidaire de ladite colonne de direction (3) ;
- ledit deuxième engrenage (52) est une deuxième roue satellite mobile en rotation sur ledit premier arbre (41) solidaire de ladite base (1), ledit premier arbre (41) étant disposé de manière parallèle à ladite colonne de direction (3), ladite première roue planétaire étant configurée pour entrainer ladite deuxième roue satellite ;
- ledit deuxième arbre (42) étant solidaire de ladite base (10) et disposé de manière coaxiale avec ladite colonne de direction (3) ;
- ladite deuxième roue satellite étant en contact avec ledit secteur de couronne (53) à l'intérieur dudit secteur de couronne (53) ; et
ledit secteur de couronne (53) s'étendant selon un angle (α) compris entre 150 et 250°.

3. Contrôleur (100) selon la revendication 1 ou 2, **caractérisé en ce qu'**il comprend un mécanisme de retour (6) dudit système réducteur (5) dans une position neutre en l'absence de sollicitation dudit actionneur manuel (2), ledit mécanisme de retour (6) comprenant :
- au moins un élément (61, 62) mobile en rotation au moins sur ledit deuxième arbre (42), ledit au moins un élément (61, 62) mobile coopérant avec ladite couronne ou ledit secteur de couronne (53) de sorte qu'un déplacement de ladite couronne ou dudit secteur de couronne (53) entraine un déplacement dudit au moins un élément (61, 62) mobile, ledit au moins un élément (61, 62) mobile pouvant se déplacer entre :
- une première position, dite position inactive, associée à la position neutre dudit système réducteur (5), dans laquelle ledit au moins un élément (61, 62) est dépourvu de sollicitation de ladite couronne ou dudit secteur de couronne (53) ; et
- au moins une deuxième position, dite position active, dans laquelle ledit au moins un élément (61, 62) est sollicité en déplacement par ladite couronne ou ledit secteur de couronne (53) ; et
- au moins un organe (63) de rappel solidaire dudit au moins un élément (61, 62) mobile de sorte que, sous l'effet dudit organe (63) de rappel, un déplacement dudit au moins un élément (61, 62) mobile entraine un déplacement de ladite couronne ou dudit secteur de couronne (53).

4. Contrôleur (100) selon la revendication 3, **caractérisé en ce que** ladite couronne ou ledit secteur de couronne (53) présente au voisinage d'un bord (534) périphérique un ergot (535) disposé dans une cavité (600) complémentaire prévue sur ledit au moins un élément (61, 62) mobile du mécanisme de retour (6) de manière à lier le déplacement dudit au moins un élément (61, 62) mobile au déplacement de ladite couronne ou dudit secteur de couronne (53).

5. Contrôleur (100) selon la revendication 4, **caractérisé en ce que** ladite base (1) comprend un châssis (44) situé entre ledit système réducteur (5) et ledit mécanisme de retour (6), et **en ce que** ledit châssis (44) présente une lumière (441) courbe de guidage du déplacement dudit ergot (535) porté par ladite couronne ou ledit secteur de couronne (53).

6. Contrôleur (100) selon la revendication 5, **caractérisé en ce que** ledit au moins un élément (61, 62) mobile présente un épaulement (613, 623) disposé dans ladite lumière (441), ledit épaulement (613, 623) définissant un moyen de guidage du déplacement dudit élément (61, 62) mobile entre ladite position inactive et ladite position active, et inversement.

7. Contrôleur (100) selon l'une quelconque des revendications 3 à 6, **caractérisé en ce que** ledit mécanisme de retour (6) comprend deux mâchoires (61, 62) opposées et mobiles entre :
- ladite position inactive, dans laquelle les extrémités libres (612, 622) des mâchoires (61, 62) sont rapprochées, et
- ladite position active, dans laquelle lesdites extrémités libres (612, 622) des mâchoires (61, 62) sont espacées angulairement,
ledit contrôleur (100) comprenant au moins un moyen de blocage (442) configuré pour maintenir en position inactive la mâchoire (61, 62) non sollicitée en rotation par ladite couronne ou ledit secteur de couronne (53) lorsque l'autre mâchoire (61, 62) est en position active de sorte que ledit organe (63) de rappel génère une force de rappel tendant à ramener ladite autre mâchoire (61, 62) en position inactive.

8. Contrôleur (100) selon la revendication 7, **caractérisé en ce que** lesdites extrémités libres (612, 622) des mâchoires (61, 62) présentent chacune au moins une surface de contact (614, 624) avec la mâchoire (61, 62) opposée, tout ou partie desdites surfaces de contact (614, 624) portant au moins un patin (64) d'amortissement.

9. Contrôleur (100) selon l'une quelconque des revendications 7 et 8, **caractérisé en ce que** lesdites mâchoires (61, 62) présentent respectivement au moins un espace creux (615, 616, 625, 626) de réception d'une portion dudit au moins un organe (63) de rappel.

10. Contrôleur (100) selon la revendication 9, **caractérisé en ce que** : lesdites mâchoires (61, 62) présentent respectivement trois évidements (615, 625) de réception d'au moins une portion d'extrémité dudit au moins un organe (63) de rappel, lesdits trois évidements (615, 625) étant répartis le long desdites mâchoires (61, 62), et ladite au moins une portion d'extrémité coopérant avec au moins un desdits évidements (615, 625).

11. Contrôleur (100) selon l'une quelconque des revendications 7 à 10, **caractérisé en ce que** lesdites mâchoires (61, 62) présentent respectivement une surface externe (610, 620) convexe de sorte que, en position inactive, lesdites mâchoires (61, 62) forment sensiblement un cylindre, et **en ce que** ledit au moins un organe (63) de rappel est disposé sur les surfaces externes (610, 620) desdites mâchoires (61, 62).

12. Contrôleur (100) selon la revendication 11, **caractérisé en ce que** lesdites mâchoires (61, 62) présentent chacune une surface interne (619, 629) concave de sorte que, en position inactive, lesdites surfaces internes (619, 629) définissent sensiblement un logement interne creux.

13. Contrôleur (100) selon l'une quelconque des revendications 1 à 12, **caractérisé en ce qu'**il comprend plusieurs étages de butées permettant d'interrompre la rotation des éléments du système réducteur (5) lorsque ceux-ci parviennent en fin de course selon une rotation dans le sens horaire ou bien anti-horaire de l'actionneur manuel (2) et comprenant un premier étage de butées situé entre la colonne de direction (3) et la deuxième roue (52) satellite, un deuxième étage situé entre la deuxième roue (52) satellite et la couronne ou le secteur de couronne (53), et un troisième étage situé entre le couronne ou un secteur de couronne (53) et un châssis (44) solidaire de la base (1).

14. Contrôleur (100) selon la revendication 13, **caractérisé en ce que** chacune des faces opposées (521, 522) de ladite deuxième roue (52) satellite comprend des éléments de butée faisant partie des premier et deuxième étage de butées respectivement agencés pour interrompre le déplacement de ladite deuxième roue (52) satellite, par rapport audit premier engrenage (51) solidaire de ladite colonne de direction (3) et par rapport à ladite couronne ou audit secteur de couronne (53), lorsque le système réducteur (5) est en fin de course.

15. Base (1) destinée à former avec un actionneur manuel (2) mobile en rotation par rapport à ladite base (1), un contrôleur (100) de jeu vidéo ou de simulation selon l'une des revendications 1 à 14.
